(19) Europäisches Patentamt / European Patent Office / Office européen des brevets

(11) **EP 4 418 763 B1**

(12) **EUROPEAN PATENT SPECIFICATION**

(45) Date of publication and mention
of the grant of the patent:
**25.02.2026 Bulletin 2026/09**

(21) Application number: **22889211.3**

(22) Date of filing: **28.10.2022**

(51) International Patent Classification (IPC):
*H04W 56/00* (2009.01)     *H04W 72/04* (2023.01)
*H04W 72/1268* (2023.01)

(52) Cooperative Patent Classification (CPC):
**H04W 56/00; H04W 56/004; H04W 56/0045;**
H04W 72/1268; H04W 72/232

(86) International application number:
**PCT/CN2022/128417**

(87) International publication number:
**WO 2023/078186 (11.05.2023 Gazette 2023/19)**

(54) **WIRELESS COMMUNICATION METHOD AND APPARATUS**

VERFAHREN UND VORRICHTUNG ZUR DRAHTLOSEN KOMMUNIKATION

PROCÉDÉ ET APPAREIL DE COMMUNICATION SANS FIL

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **04.11.2021 CN 202111302328**

(43) Date of publication of application:
**21.08.2024 Bulletin 2024/34**

(73) Proprietor: **Huawei Technologies Co., Ltd.
Shenzhen, Guangdong 518129 (CN)**

(72) Inventors:
• **WANG, Xiaolu**
**Shenzhen, Guangdong 518129 (CN)**
• **LUO, Hejia**
**Shenzhen, Guangdong 518129 (CN)**
• **LI, Rong**
**Shenzhen, Guangdong 518129 (CN)**
• **WANG, Jun**
**Shenzhen, Guangdong 518129 (CN)**

(74) Representative: **Goddar, Heinz J.
Boehmert & Boehmert
Anwaltspartnerschaft mbB
Pettenkoferstrasse 22
80336 München (DE)**

(56) References cited:
CN-A- 111 757 457        CN-A- 111 800 851
CN-A- 112 399 569        CN-A- 113 271 167
US-A1- 2021 227 481

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

Description

## TECHNICAL FIELD

This application relates to the field of communication technologies, and in particular, to a wireless communication method and an apparatus.

## BACKGROUND

In a communication system, a larger distance between a network device and a terminal device indicates a larger round-trip delay between the network device and the terminal device. For example, in a non-terrestrial network (Non-Terrestrial Network, NTN), when a satellite orbit height is 600 km and a beam diameter is 350 km, a maximum round-trip delay may reach about 13 ms (a communication elevation angle of the terminal device is 10°). When the satellite orbit height is 300 km to 35786 km (a minimum communication elevation angle is 10°), a round-trip delay range of a transparent satellite communication mode is 4 ms to 541 ms, and a round-trip delay range of a regenerative satellite communication mode is 2 ms to 270.5 ms.

To align timing of an uplink signal corresponding to a case in which the uplink signal arrives at a base station with timing of a downlink signal, a terminal device needs to perform timing advance (Timing Advance, TA) adjustment when sending the uplink signal. Usually, a TA value is equal to a round-trip delay between the base station and the terminal device. If the round-trip delay between the base station and the terminal device is large, the TA value is also large. For example, when the terminal device sends a scheduling request (Scheduling Request, SR) message on a transmission occasion (transmission occasion, TO) of a corresponding SR, the terminal device needs to send SR information 4 ms to 541 ms in advance. However, when there are services with different service requirements, if the terminal device receives, in a first slot, bandwidth switching indication information sent by the base station, the terminal device needs to switch to a new bandwidth in a specified second slot to perform data transmission, and send uplink information to the base station by using the new bandwidth after the second slot. In addition, the base station also needs to start to receive, by using the new bandwidth in the second slot, the uplink information sent by the terminal device. Because a TA value may be far greater than a time difference between the second slot and the first slot, before receiving the SR information, the base station has switched to the new bandwidth for communication. Consequently, the base station cannot receive SR information sent by the terminal device by using an original bandwidth.

Therefore, a wireless communication method needs to be urgently proposed, to ensure that when the terminal device transmits uplink information by using a switched bandwidth, the base station can accurately receive the uplink information sent by the terminal device.

CN 112 399 569 A discloses sending indication information to a network device, wherein the indication information indicates that a switching delay between a first bandwidth part and a second bandwidth part is of a first duration.

## SUMMARY

A wireless communication method and an apparatus are provided, to ensure that when a terminal device transmits uplink information by using a switched bandwidth, a network device can accurately receive the uplink information sent by the terminal device.

According to a first aspect, an embodiment of this application provides a wireless communication method. The method may be performed by a first communication apparatus. Optionally, the first communication apparatus may be a terminal device, a processor of the terminal device, or a chip corresponding to the processor. A specific form of the first communication apparatus is not specifically limited in this application. The first communication apparatus specifically performs the following steps: The first communication apparatus obtains first indication information in a first slot, where the first indication information indicates the first communication apparatus to switch from an uplink transmission bandwidth to a first transmission bandwidth; the first communication apparatus determines a second slot based on the first slot and a first switching delay, where the first switching delay is determined based on a first timing offset value, and the first timing offset value is determined based on a round-trip delay between a first location in an area covered by a second communication apparatus and the second communication apparatus; and the first communication apparatus sends first uplink information to the second communication apparatus by using the first transmission bandwidth from the second slot.

In this implementation, after obtaining, in the first slot, the first indication information for switching the uplink transmission bandwidth, the first communication apparatus can determine, based on the first slot and the first switching delay, the second slot for completing uplink transmission bandwidth switching. The first switching delay is determined based on the first timing offset value, and the first timing offset value is determined based on the round-trip delay between the first location in the area covered by the second communication apparatus and the second communication apparatus.

Therefore, it can be learned that in the method, the first switching delay can be flexibly configured on a first communication apparatus side based on the round-trip delay between the first location in the area covered by the second communication apparatus and the second communication apparatus, to ensure accuracy of determining the second slot for completing uplink bandwidth switching. Further, the first communication apparatus sends uplink information to the second communication apparatus by using the new transmission bandwidth from the second slot. Therefore, this solution can ensure that the second communication apparatus not only can receive uplink information sent by the first communication apparatus before the transmission bandwidth is switched, but also can accurately receive the uplink information sent by the first communication apparatus after the transmission bandwidth is switched.

In a possible implementation, the first indication information further indicates the first communication apparatus not to perform uplink transmission from a start moment of the first slot to a start moment of the second slot, indicates the first communication apparatus not to perform uplink transmission from an end moment of the first slot to a start moment of the second slot, or indicates the first communication apparatus not to perform uplink transmission from a moment at which the first indication information is received to a start moment of the second slot.

In this implementation, the first indication information further indicates the first communication apparatus to perform uplink transmission from a moment at which the first indication information is successfully received to the start moment of the second slot, to avoid a case in which when the first communication apparatus performs uplink transmission to the second communication apparatus in this time period, the second communication apparatus cannot receive uplink information sent by the first communication apparatus.

In a possible implementation, before the first communication apparatus obtains the first indication information in the first slot, the first communication apparatus sends second uplink information by using a second transmission bandwidth.

In this implementation, before receiving the first indication information for switching the uplink transmission bandwidth, the first communication apparatus sends uplink information by using an original transmission bandwidth (the second transmission bandwidth), to ensure normal communication of the first communication apparatus.

In a possible implementation, before the determining, by the first communication apparatus, a second slot, the method further includes: receiving, by the first communication apparatus, the first switching delay from the second communication apparatus.

In this implementation, before determining the second slot, the first communication apparatus obtains the first switching delay from the second communication apparatus, to ensure that the first communication apparatus can accurately determine the second slot based on the first switching delay.

In a possible implementation, the first switching delay includes the first timing offset value; or the first switching delay includes the first timing offset value and a second switching delay.

In this implementation, in one manner, because the second switching delay currently specified may be determined by the first communication apparatus and the second communication apparatus, the first switching delay sent by the second communication apparatus to the first communication apparatus includes the first timing offset value. The first communication apparatus may accurately determine, based on the first slot, the first timing offset value, and the second switching delay currently specified, the second slot for completing uplink transmission bandwidth switching. In other words, after the first slot, a time length of a sum of the first timing offset value and the currently specified second switching delay is delayed, and the $1^{st}$ slot after the delay is used as the second slot.

In another manner, the first switching delay sent by the second communication apparatus to the first communication apparatus includes the first timing offset value and the second switching delay. In other words, the first communication apparatus may directly obtain a sum of the first timing offset value and the second switching delay without performing calculation, thereby reducing additional overheads of the first communication apparatus.

In a possible implementation, that the first communication apparatus determines a second slot based on the first slot and a first switching delay includes: The first communication apparatus determines the second slot based on the first slot, the first timing offset value, and the second switching delay. In this implementation, the first communication apparatus can accurately and flexibly determine a slot for completing uplink transmission bandwidth switching.

In a possible implementation, the first timing offset value is a value Koffset, and the value Koffset is for determining an uplink data scheduling delay; the first timing offset value is a sum of a value Koffset and a value Kmac, the value Koffset is for determining an uplink data scheduling delay, and the value Kmac is determined based on a delay compensation time length of an uplink signal on a network side; the first timing offset value is a sum of a timing advance TA value of the first communication apparatus and a value Kmac, and the value Kmac is determined based on a delay compensation time length of an uplink signal on a network side; or the first timing offset value is a length value of a random access response window delay RAR window delay received by the first communication apparatus. In this implementation, an existing parameter value in a system is used to assign a value to the first timing offset value, so that signaling overheads can be reduced.

In a possible implementation, the first indication information is carried in downlink control information signaling or radio resource control signaling. In this implementation, the first indication information is carried in the downlink control information or the radio resource control signaling, so that it can be ensured that the terminal device receives the first indication information, and additional overheads generated during information transmission are reduced.

According to a second aspect, an embodiment of this application provides a method for determining a bandwidth switching delay. The method may be performed by a processor of a base station, or may be performed by a chip corresponding to the processor. This is not limited herein. Specifically, the following steps are included: A second communication apparatus determines a first slot; the second communication apparatus determines a second slot based on the first slot and a first switching delay, where the first switching delay is determined based on a first timing offset value, and the first timing offset value is determined based on a round-trip delay between a first location in an area covered by the second communication apparatus and the second communication apparatus; and the second communication apparatus receives, by using a first transmission bandwidth from the second slot, first uplink information sent by a first communication apparatus.

In this implementation, the second communication apparatus may determine the first timing offset value based on the round-trip delay between the first location in the area covered by the second communication apparatus and the second communication apparatus. Because the first location may be flexibly determined based on locations of different devices, in the method, the first switching delay can be determined based on an actual round-trip delay between the first location and the second communication apparatus. Therefore, accuracy of determining the second slot for switching a transmission bandwidth is high, and the second communication apparatus receives, by using a new transmission bandwidth from the second slot, uplink information sent by the first communication apparatus. Therefore, this solution can ensure that the second communication apparatus not only can receive uplink information sent by the first communication apparatus before the transmission bandwidth is switched, but also can accurately receive the uplink information sent by the first communication apparatus after the transmission bandwidth is switched.

In a possible implementation, that a second communication apparatus determines a first slot may include the following two manners:

Manner 1: The second communication apparatus sends the first indication information to the first communication apparatus, and the second communication apparatus uses, a slot to which an end moment belongs as the first slot, where the end moment is a moment at which the second communication apparatus sends the first indication information to the first communication apparatus, and the first indication information indicates the first communication apparatus to switch from an uplink transmission bandwidth to the first transmission bandwidth. In the first manner, the second communication apparatus sends the first indication information to the first communication apparatus, and the second communication apparatus directly uses, as the first slot, the slot to which the end moment for sending the first indication information belongs, and starts from the first slot, to implement uplink transmission bandwidth switching.

Manner 2: The first communication apparatus and the second communication apparatus switch a transmission bandwidth based on a timer or switch a transmission bandwidth based on consistent clear channel assessment recovery, and correspondingly obtain the first indication information for switching the uplink transmission bandwidth. The second communication apparatus uses, as the first slot, a slot to which an end moment for obtaining the first indication information by the second communication apparatus belongs. In this manner, the second communication apparatus may accurately determine the first slot, and perform calculation from the first slot, to implement uplink transmission bandwidth switching.

In a possible implementation, the first indication information further indicates the first communication apparatus not to perform uplink transmission from a start moment of the first slot to a start moment of the second slot, indicates the first communication apparatus not to perform uplink transmission from an end moment of the first slot to a start moment of the second slot, or indicates the first communication apparatus not to perform uplink transmission from a moment at which the first indication information is received to a start moment of the second slot.

In this implementation, the first indication information further indicates the first communication apparatus not to perform uplink transmission from a moment at which the first indication information is successfully received to the start moment of the second slot, to avoid a case in which when the first communication apparatus performs uplink transmission to the second communication apparatus in this time period, the second communication apparatus cannot receive uplink information sent by the first communication apparatus.

In a possible implementation, before the second communication apparatus switches to the first transmission bandwidth in the second slot, the second communication apparatus receives second uplink information by using a second transmission bandwidth. In this implementation, before switching to the first transmission bandwidth, the second communication apparatus uses an original transmission bandwidth (the second transmission bandwidth) for transmission, so that normal communication of the second communication apparatus before the transmission bandwidth switching can be ensured.

In a possible implementation, the method further includes: The second communication apparatus sends the first switching delay to the first communication apparatus. In this implementation, the first communication apparatus can obtain the first switching delay, to accurately determine the second slot for completing uplink transmission bandwidth switching, so that it can be ensured that the second communication apparatus can accurately receive, by using the new first transmission bandwidth from the second slot, uplink information sent by the first communication apparatus by using the new first transmission bandwidth from the second slot.

In a possible implementation, the first switching delay includes the first timing offset value; or the first switching delay includes the first timing offset value and a second switching delay.

In this implementation, in the first manner, because the second switching delay currently specified may be determined by the first communication apparatus and the second communication apparatus, the first switching delay sent by the second communication apparatus to the first communication apparatus includes the first timing offset value. The first communication apparatus may accurately determine, based on the first slot, the first timing offset value, and the second switching delay currently specified, the second slot for completing uplink transmission bandwidth switching. In other words, after the first slot, a time length of a sum of the first timing offset value and the currently specified second switching delay is delayed, and the $1^{st}$ slot after the delay is used as the second slot.

In another manner, the first switching delay sent by the second communication apparatus to the first communication apparatus includes the first timing offset value and the second switching delay. In other words, the first communication apparatus may directly obtain a sum of the first timing offset value and the second switching delay without performing calculation, thereby reducing overheads of calculating a switching delay by the first communication apparatus.

In a possible implementation, that the second communication apparatus determines a second slot based on the first slot and a first switching delay includes: The second communication apparatus determines the second slot based on the first slot, the first timing offset value, and the second switching delay. In this implementation, the second communication apparatus and the first communication apparatus may accurately determine, based on a same calculation manner, the second slot for completing transmission bandwidth switching, so that it can be ensured that the second communication apparatus can accurately receive, by using the new first transmission bandwidth from the second slot, uplink information sent by the first communication apparatus by using the new first transmission bandwidth from the second slot.

In a possible implementation, the first timing offset value is a value Koffset, and the value Koffset is for determining an uplink data scheduling delay; the first timing offset value is a value Koffset and a value Kmac, the value Koffset is for determining an uplink data scheduling delay, and the value Kmac is determined based on a delay compensation time length of an uplink signal on a network side; the first timing offset value is a timing advance TA value of the first communication apparatus and a value Kmac, and the value Kmac is determined based on a delay compensation time length of an uplink signal on a network side; or the first timing offset value is a length value of a random access response window delay RAR window delay received by the first communication apparatus. In this implementation, an existing parameter value in a system is used to assign a value to the first timing offset value, so that signaling overheads can be reduced.

In a possible implementation, the first indication information is carried in downlink control information DCI signaling or radio resource control RRC signaling. In this implementation, the first indication information is carried in the downlink control information or the radio resource control signaling, so that it can be ensured that the terminal device receives the first indication information, and additional overheads generated during information transmission are reduced.

According to a third aspect, an embodiment of this application provides a first communication apparatus. The first communication apparatus includes a transceiver unit and a processing unit.

The transceiver unit is configured to obtain first indication information in a first slot, where the first indication information indicates the first communication apparatus to switch from an uplink transmission bandwidth to a first transmission bandwidth. The processing unit is configured to determine a second slot based on the first slot and a first switching delay, where the first switching delay is determined based on a first timing offset value, and the first timing offset value is determined based on a round-trip delay between a first location in an area covered by a second communication apparatus and the second communication apparatus. The transceiver unit is further configured to send first uplink information to the second communication apparatus by using the first transmission bandwidth from the second slot.

In a possible design, the first indication information further indicates the first communication apparatus not to perform uplink transmission from a start moment of the first slot to a start moment of the second slot, indicates the first communication apparatus not to perform uplink transmission from an end moment of the first slot to a start moment of the second slot, or indicates the first communication apparatus not to perform uplink transmission from a moment at which the first indication information is received to a start moment of the second slot.

In a possible design, the transceiver unit is further configured to: before obtaining the first indication information in the first slot, send second uplink information by using a second transmission bandwidth.

In a possible design, the transceiver unit is further configured to: before the processing unit determines the second slot, receive the first switching delay from the second communication apparatus.

In a possible design, the first switching delay includes the first timing offset value; or the first switching delay includes the first timing offset value and a second switching delay.

In a possible design, when determining the second slot based on the first slot and the first switching delay, the processing unit is specifically configured to: determine the second slot based on the first slot, the first timing offset value, and the second switching delay.

In a possible design, the first timing offset value is a value Koffset, and the value Koffset is for determining an uplink data scheduling delay; the first timing offset value is a sum of a value Koffset and a value Kmac, the value Koffset is for determining an uplink data scheduling delay, and the value Kmac is determined based on a delay compensation time length of an uplink signal on a network side; the first timing offset value is a sum of a timing advance TA value of the first communication apparatus and a value Kmac, and the value Kmac is determined based on a delay compensation time length of an uplink signal on a network side; or the first timing offset value is a length value of a random access response window delay RAR window delay received by the first communication apparatus.

In a possible design, the first indication information is carried in downlink control information signaling or radio resource control signaling.

According to a fourth aspect, an embodiment of this application provides a second communication apparatus. The first communication apparatus includes a transceiver unit and a processing unit.

The processing unit is configured to determine a first slot. The processing unit is further configured to determine a second slot based on the first slot and a first switching delay, where the first switching delay is determined based on a first timing offset value, and the first timing offset value is determined based on a round-trip delay between a first location in an area covered by the second communication apparatus and the second communication apparatus. The transceiver unit is configured to receive, by using a first transmission bandwidth from the second slot, first uplink information sent by a first communication apparatus.

In a possible design, when determining the first slot, the processing unit is specifically configured to: use, a slot to which an end moment belongs as the first slot, where the end moment is a moment at which the transceiver unit sends first indication information to the first communication apparatus, and the first indication information indicates the first communication apparatus to switch from an uplink transmission bandwidth to a first transmission bandwidth; or use a slot to which an end moment belongs as the first slot, where the end moment is a moment at which the transceiver unit obtains first indication information, and the first indication information indicates the first communication apparatus to switch from an uplink transmission bandwidth to a first transmission bandwidth.

In a possible design, the first indication information further indicates the first communication apparatus not to perform uplink transmission from a start moment of the first slot to a start moment of the second slot, indicates the first communication apparatus not to perform uplink transmission from an end moment of the first slot to a start moment of the second slot, or indicates the first communication apparatus not to perform uplink transmission from a moment at which the first indication information is received to a start moment of the second slot.

In a possible design, the transceiver unit is further configured to: before the first transmission bandwidth is switched to, receive second uplink information by using a second transmission bandwidth.

In a possible design, the transceiver unit is further configured to send the first switching delay to the first communication apparatus.

In a possible design, the first switching delay includes the first timing offset value; or the first switching delay includes the first timing offset value and a second switching delay.

In a possible design, when determining the second slot based on the first slot and the first switching delay, the processing unit is specifically configured to: determine the second slot based on the first slot, the first timing offset value, and the second switching delay.

In a possible design, the first timing offset value is a value Koffset, and the value Koffset is for determining an uplink data scheduling delay; the first timing offset value is a sum of a value Koffset and a value Kmac, the value Koffset is for determining an uplink data scheduling delay, and the value Kmac is determined based on a delay compensation time length of an uplink signal on a network side; the first timing offset value is a sum of a timing advance TA value of the first communication apparatus and a value Kmac, and the value Kmac is determined based on a delay compensation time length of an uplink signal on a network side; or the first timing offset value is a length value of a random access response window delay RAR window delay received by the first communication apparatus.

In a possible design, the first indication information is carried in downlink control information signaling or radio resource control signaling.

According to a fifth aspect, an embodiment of this application provides a communication apparatus. The communication apparatus includes a processor coupled to a memory. The memory stores a computer program or computer instructions. The processor is configured to invoke and run the computer program or the computer instructions stored in the memory, so that the processor implements any one of the first aspect or the possible implementations of the first aspect, or the processor implements any one of the second aspect or the possible implementations of the second aspect.

Optionally, the communication apparatus further includes the foregoing memory. Optionally, the memory and the processor are integrated together.

Optionally, the communication apparatus further includes a transceiver. The processor is configured to control the transceiver to receive and send a signal, information, data, and/or the like.

According to a sixth aspect, an embodiment of this application provides a communication apparatus. The communication apparatus includes a processor. The processor is configured to invoke a computer program or computer instructions in a memory, so that the processor implements any one of the first aspect or the possible implementations of the first aspect, or the processor is configured to perform any one of the second aspect or the possible implementations of the second aspect.

The communication apparatus further includes a transceiver. The processor is configured to control the transceiver to receive and send a signal, information, data, and/or the like.

According to a seventh aspect, an embodiment of this application provides a communication apparatus. The communication apparatus includes a processor. The processor is configured to perform any one of the first aspect or the possible implementations of the first aspect, or the processor is configured to perform any one of the second aspect or the possible implementations of the second aspect.

According to an eighth aspect, an embodiment of this application further provides a computer program product including instructions. When the computer program product runs on a computer, the computer is enabled to perform any one of the first aspect or the possible implementations of the first aspect, or the computer is enabled to perform any one of the second aspect or the possible implementations of the second aspect.

According to a ninth aspect, an embodiment of this application further provides a computer-readable storage medium, including computer instructions. When the instructions are run on a computer, the computer is enabled to perform any one of the first aspect or the possible implementations of the first aspect, or the computer is enabled to perform any one of the second aspect or the possible implementations of the second aspect.

According to a tenth aspect, an embodiment of this application further provides a chip apparatus, including a processor, configured to invoke a computer program or computer instructions in a memory, so that the processor performs any one of the first aspect or the possible implementations of the first aspect, or the processor performs any one of the second aspect or the possible implementations of the second aspect.

Optionally, the processor is coupled to the memory through an interface.

For technical effects that can be achieved in any one of the third aspect or the possible implementations of the third aspect, refer to descriptions of technical effects that can be achieved in any one of the first aspect or the possible implementations of the first aspect. For technical effects that can be achieved in any one of the fourth aspect or the possible implementations of the fourth aspect, refer to descriptions of technical effects that can be achieved in any one of the second aspect or the possible implementations of the second aspect. Details are not described herein again.

## BRIEF DESCRIPTION OF DRAWINGS

FIG. 1 is a schematic diagram of a slot for uplink data timing advance adjustment;

FIG. 2A is a schematic diagram of uplink bandwidth part BWP switching;

FIG. 2B is a schematic diagram of indicating uplink bandwidth part BWP switching based on downlink control information DCI;

FIG. 2C is a schematic diagram of sending, by a terminal, a scheduling request SR in an uplink bandwidth part BWP switching scenario in non-terrestrial communication;

FIG. 3A is a schematic diagram of a communication system according to an embodiment of this application;

FIG. 3B is a schematic diagram of another communication system according to an embodiment of this application;

FIG. 4A is a flowchart of a wireless communication method according to an embodiment of this application;

FIG. 4B is a schematic diagram of a structure of a slot for determining a bandwidth switching delay according to an embodiment of this application;

FIG. 5A is a flowchart of a method for determining a bandwidth switching delay based on downlink control information according to an embodiment of this application;

FIG. 5B is a schematic diagram of a structure of a slot for determining a bandwidth switching delay based on downlink control information according to an embodiment of this application;

FIG. 5C is a detailed schematic diagram of a slot for determining a bandwidth switching delay based on downlink control information according to an embodiment of this application;

FIG. 5D is a schematic diagram of introducing a delay amount in physical uplink shared channel scheduling to solve timing advance adjustment;

FIG. 5E is a schematic diagram of determining a bandwidth switching slot based on downlink control information according to an embodiment of this application;

FIG. 5F is another schematic diagram of a slot for determining a switching bandwidth based on downlink control information according to an embodiment of this application;

FIG. 6A is a flowchart of a method for determining a bandwidth switching delay based on radio resource control information according to an embodiment of this application;

FIG. 6B is a schematic diagram of indicating uplink bandwidth part BWP switching based on radio resource control information;

FIG. 6C is a schematic diagram of a slot for determining a bandwidth switching delay based on radio resource control information according to an embodiment of this application;

FIG. 7 is a schematic flowchart of a method for determining a bandwidth switching delay based on a timer according to an embodiment of this application;

FIG. 8 is a flowchart of a method for determining a bandwidth switching delay based on consistent clear channel assessment recovery according to an embodiment of this application;

FIG. 9 is a schematic diagram of a structure of a communication apparatus according to an embodiment of this application; and

FIG. 10 is a schematic diagram of a structure of a communication device according to an embodiment of this application.

## DESCRIPTION OF EMBODIMENTS

Embodiments of this application provide a wireless communication method and an apparatus. The method and the apparatus are based on a same or similar technical concept. Because the method and the apparatus have similar problem-resolving principles, mutual reference may be made to implementations of the apparatus and the method. Repeated parts are not described again.

The following describes a delay requirement for switching an uplink BWP by a terminal device.

5G and an evolved network thereof not only need to meet various service requirements, but also need to provide wider service coverage. Compared with terrestrial communication, a network device/a satellite in a non-terrestrial network (Non-Terrestrial Network, NTN) occupies an important position in the field of wireless communication because of its features such as a long communication distance, a wide coverage area, flexible networking, and being not limited by a geographical environment condition and a ground device condition.

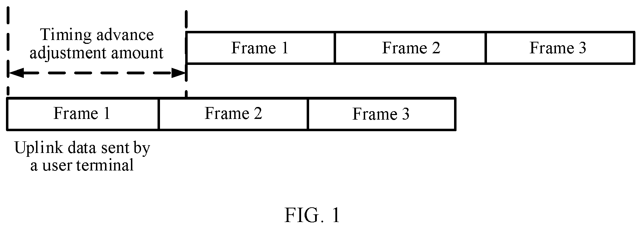

However, an altitude difference between the network device/the satellite in the NTN and a terminal device is large, and is usually greater than 300 km. When a satellite orbit height in the NTN is 600 km and a beam diameter is 350 km, a maximum round-trip delay may reach about 13 ms (when an elevation angle of communication between the terminal device and the satellite is 10°). When the satellite orbit height is 300 km to 35786 km (a minimum communication elevation angle is 10°), a round-trip delay range of a transparent satellite communication mode is 4 ms to 541 ms, and a round-trip delay range of a regenerative satellite communication mode is 2 ms to 270.5 ms. As shown in FIG. 1, to align timing of an uplink signal corresponding to a case in which the uplink signal arrives at a network device with timing of a downlink signal, a terminal device needs to perform timing advance (Timing Advance, TA) adjustment when sending the uplink signal. A value of the timing advance TA adjustment is usually equal to a round-trip delay between the terminal device and the network device. Because a round-trip delay between the terminal device and the network device is large in the NTN, a difference between timing of uplink data received by a satellite side and timing of downlink data is large. Therefore, in the NTN system, a timing advance adjustment amount of the uplink data is large.

In new radio (new radio, NR), to support different service requirements, a bandwidth part (bandwidth part, BWP) technology is used. When a service requirement for transmitting data by a terminal device changes, the terminal device may switch, in real time, a BWP for transmission, so that the service requirement can be met, and system resource overheads can be reduced.

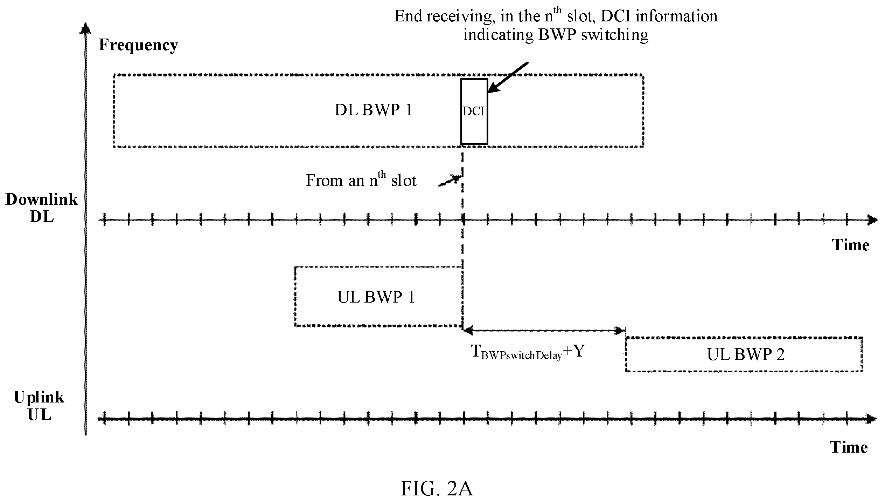

In a BWP switching scenario based on downlink control information (downlink control information, DCI), refer to FIG. 2A. The terminal device receives an uplink BWP switching instruction in an $n^{th}$ downlink slot, and the terminal may start timing from a start moment of the $n^{th}$ slot, and start to send uplink signaling/data on a new uplink BWP by delaying a time length $T_{BWPswitchDelay} + Y$. A value of $T_{BWPswitchDelay}$ supports a maximum of 3 ms. A value of Y is determined depending on whether a cell in which the terminal device is located when receiving a DCI instruction and a cell in which the terminal device is located when the BWP is switched belong to a same serving cell. When the cells are a same serving cell, Y=0; or when the cells are different serving cells, Y=1 slot length. Therefore, a maximum time length indicated by $T_{BWPswitchDelay} + Y$ is 4 ms. In this case, in the BWP switching scenario based on the DCI, a maximum length of a delay for switching an uplink BWP by the terminal device is 4 ms.

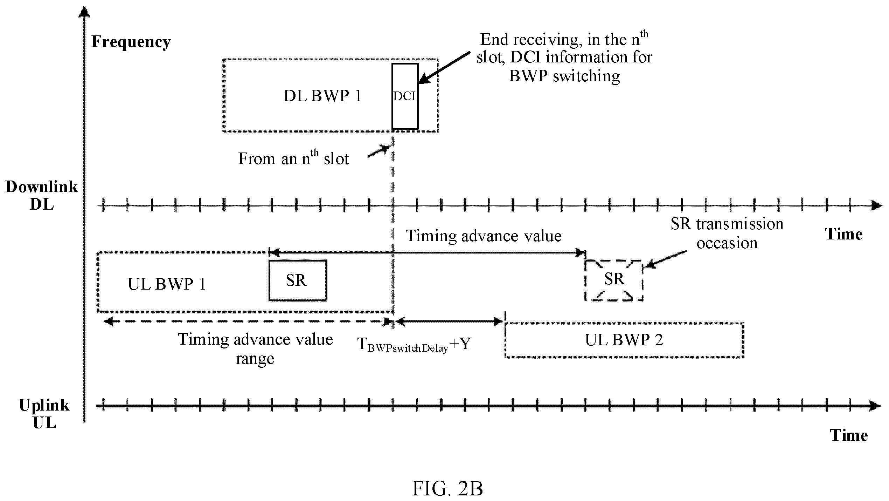

When NR is adapted to an NTN scenario, refer to FIG. 2B. The terminal device receives, in an $n^{th}$ downlink slot, a DCI instruction for uplink BWP switching, and the terminal device starts timing from a start moment of the $n^{th}$ slot. The terminal sends an uplink message/uplink data on a new uplink BWP after a delayed time length $T_{BWPswitchDelay} + Y$. For example, when the terminal device sends a scheduling request (scheduling request, SR) message on a transmission occasion (transmission occasion, TO) of a corresponding SR, because a timing advance value or a round-trip delay is large, the terminal device needs to send the SR message in advance by a time length of 4 ms to 541 ms. The timing advance value may be far greater than the time length $T_{BWPswitchDelay} + Y$, in other words, the terminal device has sent the SR message on an original uplink BWP, that is, an uplink (up link, UL) BWP 1, before receiving the DCI instruction for uplink BWP switching. After receiving the DCI instruction for uplink BWP switching, the terminal device sends an uplink message on a new BWP (namely, a UL BWP 2) in the 1st uplink slot after the delayed time length $T_{BWPswitchDelay} + Y$, and the network device also receives the uplink message on the new BWP (namely, the UL BWP 2) in the 1st uplink slot after the delayed time length $T_{BWPswitchDelay} + Y$. Therefore, the network device cannot receive the SR message sent by the terminal device on the original UL BWP (namely, the UL BWP 1).

In a possible NTN scenario, a BWP is mapped to a beam, and BWP switching is equivalent to beam switching. In other words, after the terminal device sends an uplink message on an original beam, the network device cannot receive the message sent by the terminal device on the original beam after beam switching.

It should be noted that a resource of the transmission occasion of the SR message is configured by the network device for the terminal device, and the resource includes a TO period configured by the network device for the terminal device on a physical uplink control channel (physical uplink control channel, PUCCH). For example, in an NR standard, the TO period is less than or equal to 80 ms.

Similarly, when the terminal device sends other uplink information, a problem that the network device cannot receive the uplink information when an uplink bandwidth is switched may also occur, for example, a request for uplink physical shared channel (physical uplink shared channel, PUSCH) information, periodic channel state information (periodic CSI), semi-persistent channel state information (semi-persistent CSI), or system information (system information, SI). PUCCH resources of the scheduling request (SR) message, the periodic channel state information (periodic CSI), and the semi-persistent channel state information (semi-persistent CSI) may be semi-statically allocated by using higher layer radio resource control (radio resource control, RRC) signaling.

Semi-persistent allocation may be understood as follows: A resource is directly configured by using higher layer signaling, and a period and an offset in the period are configured for the resource. The resource periodically takes effect.

The following uses an example in which the terminal device sends a system information (system information, SI) application or request (request) to describe a problem that the network device cannot receive all uplink information when a UL BWP is switched due to a large round-trip delay in the NTN scenario.

The terminal device may request, by sending information Msg1 (preamble (preamble)), on-demand SI (on-demand system information) configured by a network side. The network device configures a dedicated random access resource (10 ms ≤ period of the dedicated random access resource ≤ 2.56s) for the SI request for the terminal device, including a correspondence between a synchronization signal and PBCH block (synchronization signal and PBCH block, SSB) and a random access channel occasion (random access channel occasion, RO), and a correspondence between the SI and the preamble (preamble). The terminal device selects, based on the system information that needs to be obtained and configuration information on the network side, the corresponding RO to send the preamble. The network device determines, based on the detected preamble, the SI requested by the terminal device, and determines a transmit beam for the SI based on an RO in which the preamble is located. The network device feeds back a corresponding random access response (random access response, RAR) message to the terminal device, where the RAR includes a random preamble identifier (random access preamble identifier, RAPID). The terminal device acknowledges, by using the RAR message, that the network device receives the SI request. Then, the network device sends the corresponding SI in an SI window (window) corresponding to the SI requested by the terminal device.

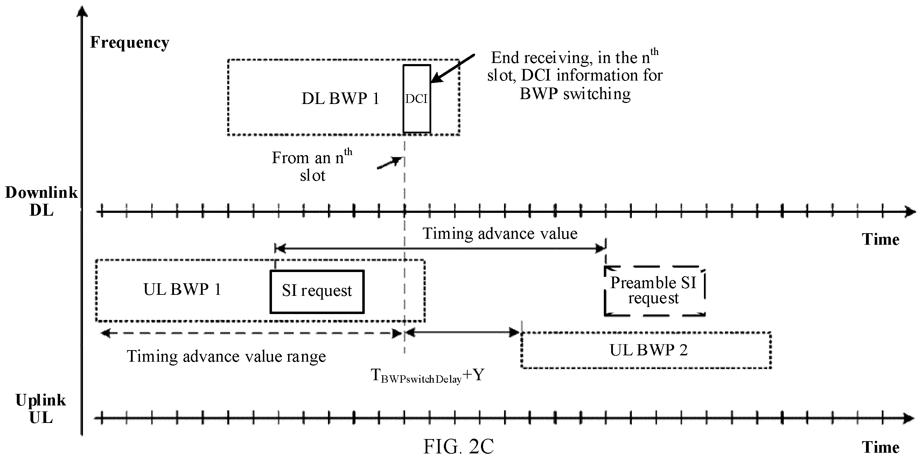

As shown in FIG. 2C, the terminal device receives, in an nth downlink slot, a DCI instruction for uplink BWP switching. When the terminal device sends an SI request message on a corresponding dedicated random access resource for the SI request, because a timing advance value or a round-trip delay is large, the terminal device needs to send the SI request in advance by a time length of 4 ms to 541 ms. In other words, the terminal device has sent the SI request message on an original uplink BWP (a UL BWP 1) before receiving the DCI instruction for uplink BWP switching. After receiving the DCI instruction for uplink BWP switching, the terminal device sends an uplink message on a new BWP (namely, a UL BWP 2) in the 1st uplink slot after the delayed time length $T_{BWPswitchDelay} + Y$, and the network device also receives the uplink message on the new BWP (namely, the UL BWP 2) in the 1st uplink slot after the delayed time length $T_{BWPswitchDelay} + Y$. Therefore, the network device cannot receive the SI request message sent by the terminal device on the original UL BWP (namely, the UL BWP 1).

In conclusion, when the NR technology is adapted to the NTN communication scenario, because the round-trip delay between the terminal device and the network device is large in the NTN scenario, after UL BWP switching, the network device cannot receive a part of an uplink signal sent by the terminal device on an original UL BWP. Therefore, a wireless communication method needs to be urgently proposed, so that in an uplink transmission bandwidth switching process, it can be ensured that the network device can accurately receive an uplink signal (or uplink information) sent by the terminal device.

Therefore, this application provides a wireless communication method. The method includes: A first communication apparatus obtains first indication information in a first slot, where the first indication information indicates the first communication apparatus to switch from an uplink transmission bandwidth to a first transmission bandwidth; then, the first communication apparatus determines a second slot based on the first slot and a first switching delay, where the first switching delay is determined based on a first timing offset value, and the first timing offset value is determined based on a round-trip delay between a first location in an area covered by a second communication apparatus and the second communication apparatus; and the first communication apparatus sends uplink information to the second communication apparatus by using the first transmission bandwidth from the second slot. Therefore, in an uplink transmission bandwidth switching process, this method can ensure that the second communication apparatus can receive the uplink information sent by the first communication apparatus.

The technical solutions of this application may be applied to an NTN system such as an unmanned aerial vehicle, a satellite communication system, or high-altitude platform station (high altitude platform station, HAPS) communication. A satellite communication system is used as an example. The satellite communication system may be integrated into a terrestrial mobile communication system, for example, a 4th generation (4th generation, 4G) communication system such as a long term evolution (long term evolution, LTE) system, a 5th generation (5th generation, 5G) communication system such as a new radio (new radio, NR) system, an internet of vehicles (vehicle to everything, V2X) communication system, and a mobile communication system (for example, a 6G mobile communication system) after the 5G network.

A communication system to which this application is applicable includes a first communication apparatus and a second communication apparatus. The first communication apparatus may be a terminal device, and the second communication apparatus may be a network device.

The following describes the terminal device and the network device in this application.

The terminal device may be a wireless terminal device that can receive scheduling and indication information of the network device. The terminal device may be a device that provides a user with voice and/or data connectivity, a handheld device with a wireless connection function, or another processing device connected to a wireless modem.

The terminal device is also referred to as user equipment (user equipment, UE), a mobile station (mobile station, MS), a mobile terminal (mobile terminal, MT), or the like. The terminal device is a device that includes a wireless communication function (providing voice/data connectivity to a user), for example, a handheld device or a vehicle-mounted device having a wireless connection function. Currently, some examples of the terminal device are: a mobile phone (mobile phone), a tablet computer, a notebook computer, a palmtop computer, a mobile internet device (mobile internet device, MID), a wearable device, a virtual reality (virtual reality, VR) device, an augmented reality (augmented reality, AR) device, a wireless terminal in industrial control, a wireless terminal in the internet of vehicles, a wireless terminal in self driving (self driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), or the like. For example, the wireless terminal in the internet of vehicles may be a vehicle-mounted device, an entire vehicle device, a vehicle-mounted module, a vehicle, or the like. The wireless terminal in industrial control may be a camera, a robot, or the like. The wireless terminal in the smart home may be a television, an air conditioner, a sweeper, a sound box, a set-top box, or the like.

The network device may be a device in a wireless network. For example, the network device may be a device that is deployed in a radio access network and that provides a wireless communication function for the terminal device. For example, the network device may be a radio access network (radio access network, RAN) node that connects the terminal device to the wireless network, and may also be referred to as an access network device.

The network device includes but is not limited to: an evolved NodeB (evolved NodeB, eNB), a home NodeB (for example, a home evolved NodeB, or a home NodeB, HNB), a baseband unit (baseband unit, BBU), an access point (access point, AP) in a wireless fidelity (wireless fidelity, Wi-Fi) system, a wireless relay node, a wireless backhaul node, a transmission point (transmission point, TP), or a transmission reception point (transmission reception point, TRP), or the like, and may be a network device in a 5G mobile communication system, for example, a next generation NodeB (next generation NodeB, gNB), a transmission reception point (transmission reception point, TRP) or a TP in an NR system, or one antenna panel or one group of antenna panels (including a plurality of antenna panels) of a base station in the 5G mobile communication system. Alternatively, the network device may be a network node that forms a gNB or a transmission point, for example, a BBU or a distributed unit (distributed unit, DU). Alternatively, the device may be a device that undertakes a base station function in device-to-device (Device-to-Device, D2D), vehicle-to-everything (vehicle-to-everything, V2X), machine-to-machine (machine-to-machine, M2M) communication, internet of things (Internet of Things) communication, or the like.

In some deployments, the gNB may include a central unit (central unit, CU) and a distributed unit (distributed unit, DU). The gNB may further include an active antenna unit (active antenna unit, AAU). The CU performs some functions of the gNB, and the DU performs some functions of the gNB. For example, the CU is responsible for processing a non-real-time protocol and service, and implementing functions of a radio resource control RRC layer and a packet data convergence protocol (packet data convergence protocol, PDCP) layer. The DU is responsible for processing a physical layer protocol and a real-time service, and implementing functions of a radio link control (radio link control, RLC) layer, a MAC layer, and a physical (physical, PHY) layer. The AAU implements some physical layer processing functions, radio frequency processing, and a function related to an active antenna. The information at the RRC layer is finally changed to the information at the PHY layer, or is changed from the information at the PHY layer. Therefore, in this architecture, the higher layer signaling (for example, the RRC layer signaling) may also be considered to be sent by the DU, or sent by the DU and the AAU. It may be understood that the network device may be a device including one or more of the following: a CU node, a DU node, and an AAU node. In addition, the CU may be classified as a network device in the RAN, or a network device in a core network (core network, CN). This is not limited in this application.

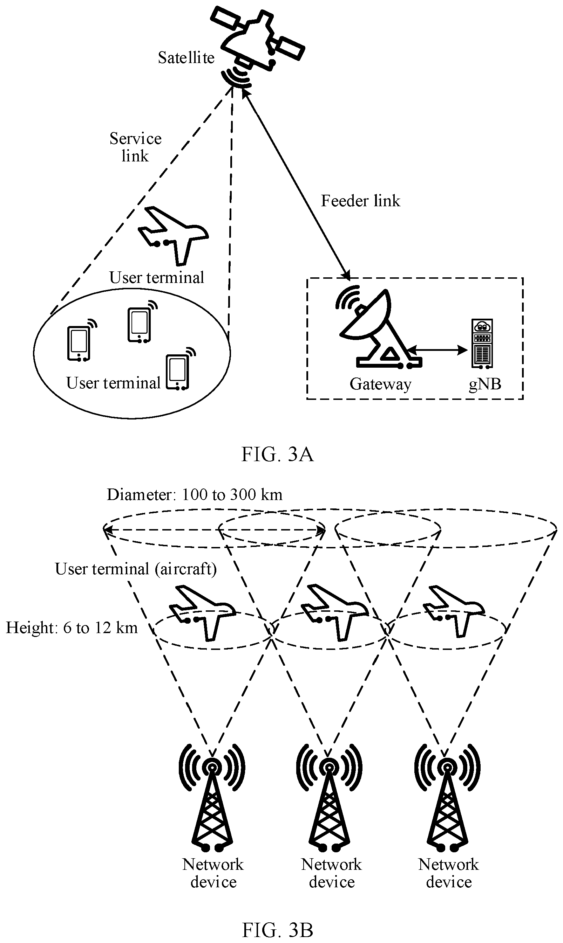

For ease of understanding the technical solutions in embodiments of this application, the following shows, with reference to FIG. 3A and FIG. 3B, two possible communication systems to which a wireless communication method provided in embodiments of this application is applicable.

FIG. 3A is a schematic diagram of a communication system according to an embodiment of this application. FIG. 3A shows a satellite communication system. A network device in the communication system may include a satellite device and a gateway (gateway). A user terminal in the communication system may include an internet of things terminal, or may be a terminal in another form and having other performance, for example, a mobile phone terminal or a high-altitude aircraft. This is not limited herein. A link between a satellite and a user terminal is referred to as a service link (service link), and a link between a satellite and a gateway is referred to as a feeder link (feeder link).

Similarly, the solutions of this application may also be applicable to a multi-satellite communication scenario extended from the communication scenario shown in FIG. 3A.

It should be noted that, usually, satellite devices can work in transparent (transparent) mode or regenerative (regenerative) mode. When a satellite works in transparent (transparent) mode, the satellite has a relay forwarding function, and a gateway station has functions of a base station or a part of the functions of the base station. In this case, the gateway station may be considered as the base station. Alternatively, the base station and the gateway station may be separately deployed, and a delay of a feed link includes two parts: a delay from the satellite to the gateway and a delay from the gateway station to the gNB. In the transparent mode in the solutions of this application, an example in which the gateway station and the gNB are used as a whole is used, in other words, a case in which the gateway station and the gNB are together or at close locations. If the gateway is far away from the gNB, the delay of the feed link is a sum of the delay from the satellite to the gateway and the delay from the gateway to the gNB.

When the satellite works in regenerative (regenerative) mode, the satellite has a data processing capability and functions of a base station or a part of the functions of the base station. In this case, the satellite can be considered as a base station. In addition, the gNB is connected to a core network.

Refer to FIG. 3B. FIG. 3B shows an ATG (air to ground) air-to-ground communication scenario. In the communication scenario, a network device may include a ground base station, and a user terminal may include a high-altitude aircraft, an on-board handheld terminal, and the like.

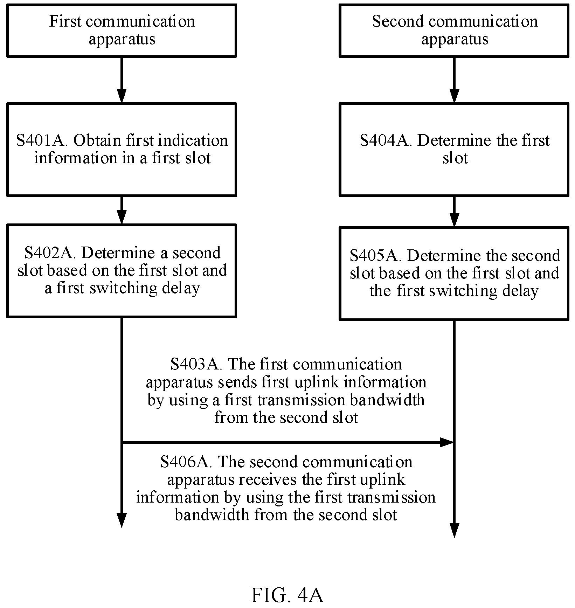

FIG. 4A is a flowchart of a wireless communication method according to an embodiment of this application. The method provided in this embodiment of this application may be, but not limited to, applied to the communication systems shown in FIG. 3A and FIG. 3B. Refer to FIG. 4A. A procedure of the method includes the following steps.

S401A. A first communication apparatus obtains first indication information in a first slot.

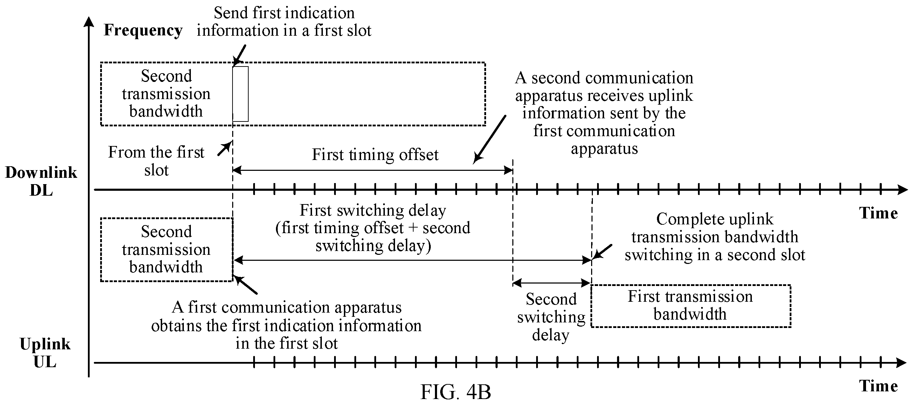

In an implementation, refer to FIG. 4B. The first communication apparatus obtains the first indication information from a second communication apparatus in the first slot, where the first indication information indicates the first communication apparatus to switch from an uplink transmission bandwidth to a first transmission bandwidth. It should be understood that both the first communication apparatus and the second communication apparatus need to start timing in the first slot.

Optionally, the first indication information may be carried in downlink control information signaling or radio resource control signaling, to reduce transmission resource overheads.

In another implementation, it is determined, based on a timer or based on consistent clear channel assessment recovery, that the first communication apparatus or the second communication apparatus is indicated in the first slot to switch the uplink transmission bandwidth.

For example, a timer is set on a first communication apparatus side, the timer outputs the first indication information at a preset moment, and the first communication apparatus obtains the first indication information in the first slot. The first indication information indicates the first communication apparatus to switch from the uplink transmission bandwidth to the first transmission bandwidth. In other words, the first communication apparatus determines, in a slot in which the timer expires, to switch from the uplink transmission bandwidth to the first transmission bandwidth.

Alternatively, the first communication apparatus obtains clear channel assessment recovery information through detection/measurement in an $n^{th}$ slot. If the clear channel assessment information indicates that a channel detected/measured by the first communication apparatus is occupied, the first communication apparatus is indicated to switch from the uplink transmission bandwidth to the first transmission bandwidth.

It should be noted that, that a first communication apparatus obtains first indication information in a first slot may specifically include the following: The first communication apparatus may receive the first indication information at a start position moment of the first slot, receive the first indication information at an end moment of the first slot, or receive the first indication information at a moment in the first slot. Therefore, the first communication apparatus may start timing based on a moment at which the first indication information is actually received. The second communication apparatus is similar to the second communication apparatus. Details are not described herein again.

Optionally, the first communication apparatus may be a terminal device, and the second communication apparatus is a network device.

In a possible implementation, before the first communication apparatus obtains the first indication information in the first slot, the first communication apparatus sends second uplink information by using a second transmission bandwidth, to ensure normal communication of the first communication apparatus.

S402A. The first communication apparatus determines the second slot based on the first slot and the first switching delay.

The first switching delay is determined based on a first timing offset value, and the first timing offset value is determined based on a round-trip delay between a first location in an area covered by the second communication apparatus and the second communication apparatus.

It should be noted that the first location in the area covered by the second communication apparatus may be a point that is farthest from the second communication apparatus in the area covered by the second communication apparatus, may be a point that is farthest from the second communication apparatus in an area covered by a cell in which the terminal device is located, or may be a point that is farthest from the second communication apparatus in an area covered by a beam in which the terminal device is located. Alternatively, the first location may be a location of the terminal device. This may be specifically determined based on an actual communication device, and is not specifically limited in this application.

In an implementation, the first indication information further indicates the first communication apparatus not to send uplink information from a start moment of the first slot to a start moment of the second slot, indicates the first communication apparatus not to send the uplink information from an end moment of the first slot to the start moment of the second slot, or indicates the first communication apparatus not to send the uplink information from a moment at which the first indication information is received to the start moment of the second slot. Therefore, it can be avoided that when the first communication apparatus sends uplink information to the second communication apparatus in this time period, the second communication apparatus cannot receive the uplink information.

In an implementation, that the first communication apparatus determines a second slot based on the first slot and a first switching delay may specifically include the following: Refer to FIG. 4B. The first switching delay in the solution of this application is a sum of the first timing offset value and a second switching delay, and the second switching delay may be a switching delay specified in a standard. Therefore, the first communication apparatus may determine the second slot based on the first slot, the first timing offset value, and the second switching delay. In other words, the second slot is the 1st slot that is after the first slot and that is obtained by delaying a length time of the sum of the first timing offset value and the second switching delay.

Therefore, in the second slot, the first communication apparatus switches to a new transmission bandwidth (namely, the first transmission bandwidth).

It should be noted that the first communication apparatus may switch to the first transmission bandwidth at the start moment of the second slot, or the first communication apparatus may switch to the first transmission bandwidth at a moment in the second slot. If the first communication apparatus switches to the first transmission bandwidth at a moment in the second slot, the first communication apparatus needs to start to send first uplink information by using the new transmission bandwidth (namely, the first transmission bandwidth) at the moment in the second slot.

In an implementation, before the first communication apparatus determines the second slot, the first communication apparatus needs to receive the first switching delay from the second communication apparatus. Specifically, the following possible implementations may be included:

In a possible implementation, the first switching delay includes the first timing offset value.

In this implementation, the first communication apparatus needs to determine the second switching delay (namely, switch_delay) by itself. After obtaining the first timing offset value, the first communication apparatus may use the sum of the first timing offset value and the second switching delay as the first switching delay, to determine the second slot for completing uplink transmission bandwidth switching. The second switching delay may be a switching delay specified in a standard. Details are not described herein.

In another possible implementation, the first switching delay includes the first timing offset value and the second switching delay.

In this implementation, the first communication apparatus obtains the first timing offset value and the second switching delay from a second communication apparatus side, so that the first communication apparatus can directly determine the first switching delay based on the first timing offset value and the second switching delay, and can determine the second slot for completing uplink transmission bandwidth switching. The first communication apparatus does not need to perform calculation by itself, so that additional overheads of the first communication apparatus can be reduced.

For different uplink transmission bandwidth switching scenarios, the first communication apparatus may determine the second switching delay in a plurality of manners. For example, the following several manners may be specifically included:

(1) In a scenario of uplink bandwidth part UL BWP switching based on DCI on a single component carrier (Component Carrier, CC), switch_delay satisfies the following formula:

$$\text{switch\_delay} = T_{\text{BWPswitchDelay}} + Y \quad \text{Formula 1}$$

$T_{\text{BWPswitchDelay}}$ represents a BWP switching delay specified in a protocol, and may be obtained through table lookup based on a subcarrier spacing (sub-carrier spacing, SCS) and a terminal type.

If a serving cell in which DCI for BWP switching is sent to the first communication apparatus (the terminal device) and a serving cell in which BWP switching is performed are a same serving cell, Y is equal to 0. If a serving cell in which DCI for BWP switching is sent to the first communication apparatus (the terminal device) and a serving cell in which BWP switching is performed are different serving cells, Y is equal to a length of one slot, and a time length of T_offset+$T_{\text{BWPswitchDelay}}$ + Y or $T_{\text{BWPswitchDelay}}$ +Y is determined based on a smaller SCS of a scheduling cell before and after BWP switching.

(2) In a scenario of UL BWP switching based on DCI on a plurality of CCs, switch_delay satisfies the following formula:

$$\text{switch\_delay} = T_{\text{MultipleBWPswitchDelay}} = T_{\text{BWPswitchDelay}} + D*(N-1) \quad \text{Formula 2}$$

$T_{\text{MultipleBWPswitchDelay}}$ represents a BWP switching delay of the plurality of CCs, D represents an incremental delay, a value of D may be determined based on a capability of the terminal device according to a protocol agreement, and N represents a quantity of single component carriers CCs for simultaneous BWP switching.

Alternatively, when UL BWP switching based on DCI on a plurality of CCs is performed in an active period or a non-active period of discontinuous reception (discontinuous reception, DRX), switch_delay satisfies the following formula:

$$\text{switch\_delay} = T_{\text{MultipleBWPswitchDelay}} + X \quad \text{Formula 3}$$

X represents a length of one slot. Optionally, if the terminal receives a DCI-based BWP switching instruction after the 3rd symbol in a slot, one more slot length may be added based on the formula 3.

(3) In a scenario of UL BWP switching based on RRC information on a single CC, switch_delay satisfies the following formula:

$$\text{switch\_delay} = \frac{T_{\text{RRCprocessingDelay}} + T_{\text{BWPswitchDelayRRC}}}{\text{slot length}} \quad \text{Formula 4}$$

$T_{\text{RRCprocessingDelay}}$ represents a delay of an RRC information processing process, $T_{\text{BWPswitchDelayRRC}}$ represents a delay of BWP switching based on RRC specified in a protocol, for example, $T_{\text{BWPswitchDelayRRC}}$ =6 ms, and "slot length" represents a slot length corresponding to a smaller SCS before and after BWP switching, and "slot length" may be an NR slot length.

(4) In a scenario of UL BWP switching based on RRC information on a plurality of CCs, switch_delay may satisfy the following formula:

$$\text{switch\_delay} = \frac{T_{\text{RRCprocessingDelay}} + T_{\text{BWPswitchDelayRRC}} + D_{RRC}*(N-1)}{\text{NR slot length}} \quad \text{Formula 5}$$

A value of $D_{RRC}$ is determined based on a capability of the terminal device. When the first communication apparatus (the terminal device) is of a type 1 type, $D_{RRC}$ = 0. When the first communication apparatus (the terminal device) is of a type 2 type, $D_{RRC}$ = D.

(5) In a scenario of UL BWP switching based on a timer on a single CC, switch_delay may satisfy the following formula:

$$\text{switch\_delay} = T_{\text{BWPswitchDelay}} \quad \text{Formula 6}$$

(6) In a scenario of UL BWP switching based on a timer on a plurality of CCs, switch_delay may satisfy the foregoing formula 6.

(7) In a scenario of UL BWP switching on consistent clear channel assessment recovery (BWP switching on Consistent UL CCA recovery), switch_delay also satisfies the foregoing formula 6.

In an implementation, an existing parameter value in a system may be used to assign a value to the first timing offset value (T_offset), thereby reducing signaling overheads.

Optionally, the following several parameters may be assigned to the first timing offset value. Specifically, the following several parameters may be included:

In a possible implementation, the first timing offset value is a value Koffset, and the value Koffset is for determining an uplink data scheduling delay.

In a possible implementation, the first timing offset value is a sum of a value Koffset and a value Kmac, the value Koffset is for determining an uplink data scheduling delay, and the value Kmac is determined based on a delay compensation time length of an uplink signal on a network side.

In a possible implementation, the first timing offset value is a sum of a timing advance TA value of the first communication apparatus and a value Kmac, and the value Kmac is determined based on a delay compensation time length of an uplink signal on a network side.

In a possible implementation, the first timing offset value is a length value of a random access response window delay RAR window delay received by the first communication apparatus.

S403A. The first communication apparatus sends the first uplink information to the second communication apparatus by using the first transmission bandwidth from the second slot.

It should be noted that, if the first communication apparatus switches to a new transmission bandwidth (namely, the first transmission bandwidth) at the start moment of the second slot, the first communication apparatus sends the first uplink information by using the first transmission bandwidth from the second slot (including the second slot). If the first communication apparatus switches to the new transmission bandwidth (namely, the first transmission bandwidth) on a symbol in the second slot, the first communication apparatus sends the first uplink information by using the first transmission bandwidth from the symbol in the second slot.

Similarly, refer to FIG. 4B, the second communication apparatus also receives, by using the first transmission bandwidth from the second slot, the first uplink information sent by the first communication apparatus. Details are not described herein again. It should be understood that the first uplink information and the second uplink information may belong to a same type of information, or may belong to different types of information. This is not specifically limited in this application.

S404A. The second communication apparatus determines the first slot.

It should be noted that step S404A corresponds to step S401A, and an execution sequence of step S404A and step S401A is not specifically limited in this application.

In an implementation, that the second communication apparatus determines the first slot may be implemented as follows:

In a possible implementation, the second communication apparatus uses a slot to which an end moment belongs as the first slot, where the end moment is a moment at which the second communication apparatus sends the first indication information to the first communication apparatus, and the first indication information indicates the first communication apparatus to switch from the uplink transmission bandwidth to the first transmission bandwidth.

In a possible implementation, the second communication apparatus uses a slot to which an end moment belongs as the first slot, where the end moment is a moment at which the second communication apparatus obtains the first indication information, the first indication information indicates the second communication apparatus to switch from the uplink transmission bandwidth to the first transmission bandwidth. This case may occur in a scenario in which the transmission bandwidth is switched based on a timer or the transmission bandwidth is switched based on consistent clear channel assessment recovery. Herein, refer to the example of step S401A.

S405A. The second communication apparatus determines the second slot based on the first slot and the first switching delay.

It should be noted that step S405A corresponds to step S402A, and an execution sequence of step S405A and step S402A is not specifically limited in this application.

When the second communication apparatus performs step S405A, for details, refer to step S402A. Details are not described herein again.

S406A. The second communication apparatus receives the first uplink information by using the first transmission bandwidth from the second slot.

It should be noted that step S406A corresponds to step S403A. To be specific, the first communication apparatus sends the first uplink information to the second communication apparatus by using the first transmission bandwidth from the second slot, and the second communication apparatus receives, by using the first transmission bandwidth from the second slot, the first uplink information sent by the first communication apparatus.

In an implementation, before the second communication apparatus switches to the first transmission bandwidth, the second communication apparatus receives the second uplink information by using the second transmission bandwidth.

In conclusion, this application provides the wireless communication method. The method includes: The first communication apparatus obtains the first indication information in the first slot, where the first indication information indicates the first communication apparatus to switch from the uplink transmission bandwidth to the first transmission bandwidth; then, the first communication apparatus determines the second slot based on the first slot and the first switching delay, where the first switching delay is determined based on the first timing offset value, and the first timing offset value is determined based on the round-trip delay between the first location in an area covered by the second communication apparatus and the second communication apparatus; and the first communication apparatus sends the uplink information to the second communication apparatus by using the first transmission bandwidth from the second slot. Therefore, in an uplink transmission bandwidth switching process, this method can ensure that the second communication apparatus can receive an uplink signal sent by the first communication apparatus.

Based on the wireless communication method provided in the foregoing embodiment, this application further provides the following several specific embodiments based on the method, to describe the technical solution of this application in detail.

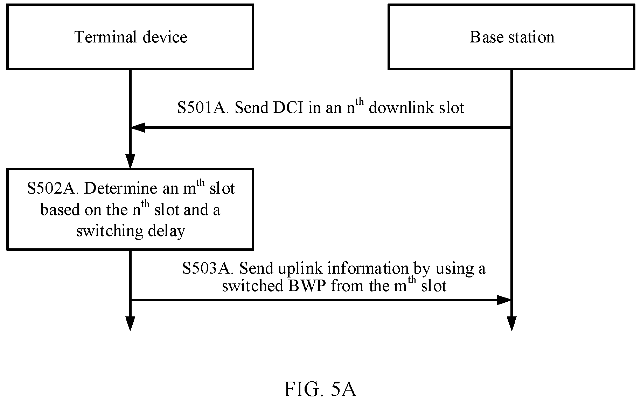

In a possible implementation, in a scenario of BWP switching based on downlink control information, a base station sends the downlink control information to a terminal device, where the downlink control information indicates the terminal device to switch from a UL BWP 1 to a UL BWP 2. The following uses an example in which the downlink control information is DCI for description. Refer to FIG. 5A. A specific method procedure in this embodiment is as follows:

S501A. A base station sends DCI to a terminal device in an $n^{th}$ downlink slot, where the DCI indicates the terminal device to switch from a UL BWP 1 to a UL BWP 2, and n is a non-negative integer.

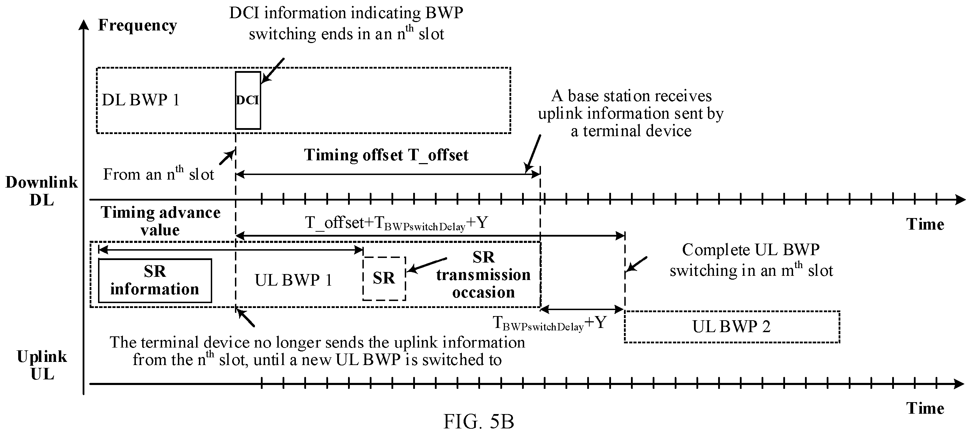

Correspondingly, refer to FIG. 5B. The terminal device receives the DCI in the $n^{th}$ slot.

It should be noted that because there is a transmission delay between the base station and the terminal device, on an absolute time axis, time when the base station sends the DCI is different from time when the terminal device receives the DCI. However, in this embodiment of this application, as shown in FIG. 5B, the $n^{th}$ slot is a slot in a relative time sequence in which the base station and the terminal device use a reference frame structure sequence. Both the base station and the terminal device use a relative time axis or a system frame/slot of a system frame structure as a reference.

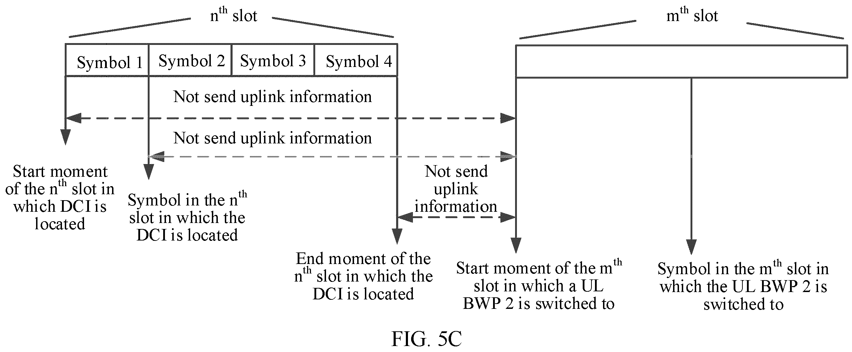

Specifically, refer to FIG. 5C. After receiving the DCI in the $n^{th}$ slot, the terminal device no longer sends uplink information to the base station. Specifically, the following several cases may be included:

Case 1: The terminal device does not send the uplink information from a start moment of the $n^{th}$ slot in which the DCI is located.

Case 2: The terminal device does not send the uplink information from a symbol in the $n^{th}$ slot in which the DCI is located.

Case 3: The terminal device does not send the uplink information from an end moment of the $n^{th}$ slot in which the DCI is located.

S502A. The terminal device determines an $m^{th}$ slot based on the $n^{th}$ slot and a switching delay, where m is a positive integer greater than n.

Refer to FIG. 5B. A start moment of the $m^{th}$ slot is a moment at which the terminal device completes BWP switching. In addition, the base station also completes UL BWP switching at the start moment of the $m^{th}$ slot.

Specifically, the terminal device and the base station may complete UL BWP switching at the start moment of the $m^{th}$ slot. To be specific, the terminal device and the base station may use the UL BWP 2 from the start moment of the $m^{th}$ slot, the terminal device and the base station may complete UL BWP switching at an end moment of the $m^{th}$ slot, or the terminal device and the base station may complete UL BWP switching at a moment in the $m^{th}$ slot.

That the terminal device no longer sends the uplink information to the base station after receiving the DCI may specifically include the following:

Based on the case 1 in step S501A, the terminal device does not send the uplink information between the start moment of the $n^{th}$ slot and the $m^{th}$ slot.

Based on the case 2 in step S501A, the terminal device does not send the uplink information between a moment at which the DCI is received and the $m^{th}$ slot.

Based on the case 3 in step S501A, the terminal device does not send the uplink information between the end moment of the $n^{th}$ slot and the $m^{th}$ slot.

Refer to FIG. 5B. The switching delay in this embodiment may satisfy the following formula:

$$\text{Switching delay}=\text{switch\_delay}+\text{T\_offset} \quad \text{Formula 7}$$

switch_delay (equivalent to the foregoing second switching delay) represents a delay length of uplink bandwidth part UL BWP switching specified in a standard, and switch_delay is determined based on time required by different hardware devices to complete BWP switching. To be specific, the terminal device completes UL BWP switching after delaying duration of switch_delay from the start moment of the nth slot in which the DCI is received.

Specifically, a value of switch_delay, that is, the delay length of UL BWP switching may include the following several implementations:

In a possible implementation, in a scenario of UL BWP switching based on DCI on a single carrier element CC, the value of switch_delay may satisfy the foregoing formula 1.

For example, when switch_delay = 18 , switch_delay=18*0.125 ms=2.25 ms (according to an NR standard, a type 2 is selected for $T_{BWPswitchDelay}$ , and SCS=120 kHz). Alternatively, the switching delay may be expressed T_offset*slot_duration / UL_slot_duration + switch_delay = 122(slot) , where UL_slot_duration represents an uplink slot length, slot_duration / UL_slot = $2^{\wedge}(\mu\_UL / \mu\_DL)$ , $\mu\_DL$ is related to a subcarrier spacing of a downlink signal, the subcarrier spacing of the downlink signal is $15KHz*2^{\wedge}(\mu\_DL)$, and the downlink signal may be a physical downlink control channel (physical downlink control channel, PDCCH), a physical downlink shared channel (physical downlink shared channel, PDSCH), or the like. $\mu\_UL$ is related to a subcarrier spacing of an uplink signal. The subcarrier spacing of the uplink signal is $15KHz * 2^{\wedge}(\mu\_UL)$, and the uplink signal may be a PUCCH, a PUSCH, or the like.

If a serving cell in which the DCI for BWP switching is sent to the terminal device and a serving cell in which BWP switching is performed are a same serving cell, Y is equal to 0.

If a serving cell in which the DCI for BWP switching is sent to the terminal device and a serving cell in which BWP switching is performed are different serving cells, Y is equal to a length of one slot, and a time length of T_offset + $T_{BWPswitchDelay}$ + Y or $T_{BWPswitchDelay}$ + Y is determined based on a smaller SCS of a scheduling cell before and after BWP switching.

In a possible implementation, in a scenario of UL BWP switching based on DCI on a plurality of single carrier element CCs, the value of switch_delay may satisfy the foregoing formula 2.

In a possible implementation, when BWP switching is performed between non-adjacent channel bandwidths or partially overlapping channel bandwidths, the value of switch_delay may satisfy the foregoing formula 3.

T_offset represents a timing offset value. For example, assuming that a maximum round-trip delay between the base station and the terminal device is 12.88 ms, the base station configures the timing offset value

$$T\_offset=\lceil 12.88 \text{ ms/slot\_duration} \rceil=13$$ for the terminal device, where slot_duration=1 ms. The symbol $\lceil \cdot \rceil$

represents rounding up, and slot_duration represents a time unit, and may be one slot length, a fixed time length, or a fixed slot length corresponding to a subcarrier spacing (for example, a slot length corresponding to SCS=15 kHz). slot_duration is for quantizing a unit time length of T_offset.

Optionally, the delay length switch_delay for BWP switching may be obtained by the terminal device and the base station, and the base station only needs to send the timing offset value T_offset to the terminal device. Alternatively, the base station sends a sum of switch_delay and T_offset to the terminal device, and the terminal device may directly use the sum of switch_delay and T_offset.

Therefore, refer to FIG. 5B. The terminal device receives, in the nth slot, the DCI indicating to perform UL BWP switching, and starts timing from the start moment of the nth slot. The terminal device sends information on the new UL BWP 2 from the 1st uplink slot after a time length T_offset+switch_delay. In other words, the terminal device needs to complete UL BWP switching within the time length T_offset+switch_delay.

In this embodiment, when the terminal device performs step S502A, a base station side may also determine the mth slot based on the nth slot and the switching delay. For specific content, refer to step S502A performed by the terminal device. Details are not described herein again.

It should be noted that the base station sends, in the nth slot, the DCI for UL BWP switching, and still receives, in the time period T_offset or T_offset+switch_delay from the start moment of the nth slot, an uplink signal sent by the terminal device on the UL BWP 1 that is before switching. It should be understood that the uplink signal is sent by the terminal device on the UL BWP 1 that is before switching.

It should be noted that, to reduce signaling overheads, an existing parameter value in a system may be for assigning a value to T_offset. Specifically, the following assignment manners may be included but are not limited to:

Manner 1: A value Koffset is reused to determine a switching delay of UL BWP switching.

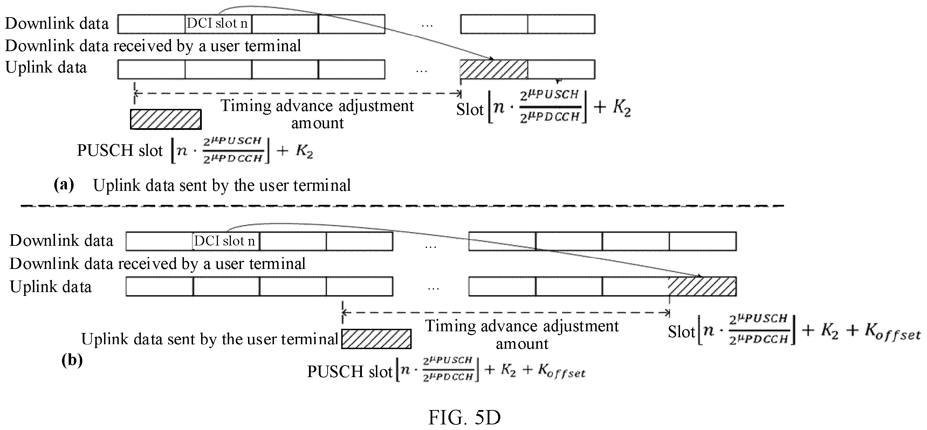

Refer to FIG. 5D. In an NTN communication scenario, a network side sends a delay amount Koffset to the terminal device, to resolve a problem that a time length between PUSCH signaling scheduled by using the DCI received by the terminal device and uplink PUSCH data is not sufficiently large, and the terminal device does not have sufficient time to perform TA adjustment, as shown in (a) in FIG. 5D. As shown in (b) in FIG. 5D, after the value Koffset is added, a delay of scheduling uplink data by using the DCI is increased. This can ensure that the terminal device has a sufficient time interval to perform TA adjustment.

The value Koffset may be determined based on a round-trip delay (for example, the maximum round-trip delay between the terminal device and the base station) between a first location in an area covered by the base station and the base station or based on a maximum TA value used by the terminal device. That is, the value Koffset may satisfy the

following formula:

$$Koffset=\lceil RTD\_max/slot\_duration\rceil \quad \text{Formula 8}$$

RTD_max represents the round-trip delay between the first location in the area covered by the base station and the base station.

Therefore, if the terminal device receives an uplink grant/scheduling information in the $n^{th}$ downlink slot, the PUSCH data of the terminal device needs to be sent in an uplink slot

$$\lfloor n\cdot 2^{\wedge}(\mu\_PUSCH)/2^{\wedge}(\mu\_PDCCH)\rfloor+K\_2+Koffset \text{, where K\_2=0, ..., 32 is indicated by a DCI instruction}$$

to indicate a value of K2. $\mu$_PUSCH and $\mu$_PDCCH are related to subcarrier spacings of a PUSCH and a PDCCH. That is, the subcarrier spacing of the PUSCH is $2^{\wedge}(\mu\_PUSCH)*15$ kHz, and the subcarrier spacing of the PDCCH is $2^{\wedge}(\mu\_PDCCH)*15$ kHz.

In the manner 1, the value Koffset is reused as the timing offset value T_offset. To be specific, when a UL BWP switching delay is determined, T_offset=Koffset.

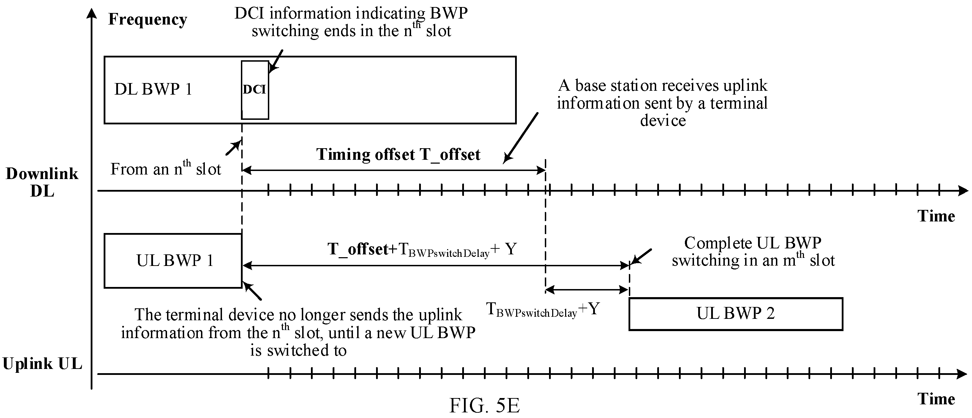

In an example, refer to FIG. 5E. The base station sends T_offset to the terminal, where T_offset=Koffset, to determine a length of the uplink BWP switching delay. The terminal device receives T_offset, and may obtain the switching delay of UL BWP switching through calculation according to the foregoing formula 7.

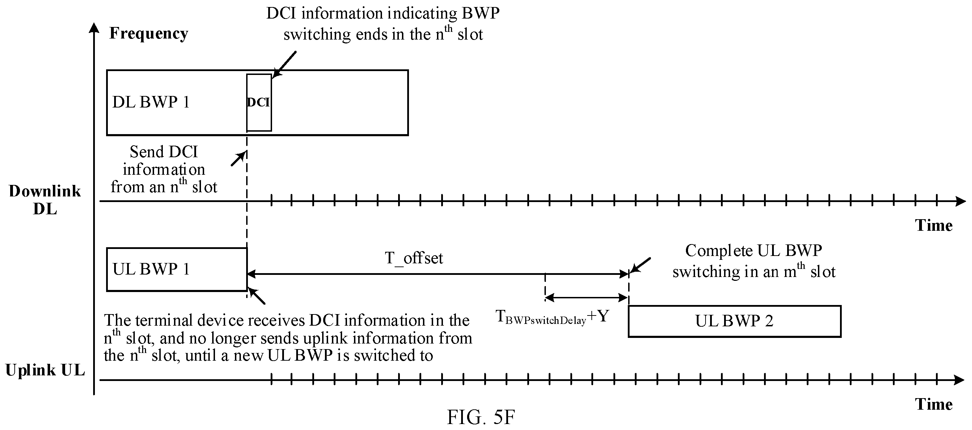

In another example, refer to FIG. 5F. A switching delay sent by the base station to the terminal device includes a first timing offset value T_offset, and T_offset includes a BWP switching delay length switch_delay. In this way, the terminal device can directly determine the switching delay without performing calculation according to the foregoing formula 7, thereby saving computing resources of the terminal device.

The terminal device receives a UL BWP switching instruction in the $n^{th}$ downlink slot, and the terminal device starts timing from the start of the $n^{th}$ slot, and does not send an uplink signal within the length of the switching delay. The terminal device starts timing from the start of the $n^{th}$ slot, and sends an uplink message on a new BWP (namely, the UL BWP 2) from the $1^{st}$ uplink slot after the length of the switching delay. In other words, the terminal device needs to complete UL BWP switching within the length of the switching delay. In addition, uplink information or the uplink message is received on the new BWP (namely, the UL BWP 2) in the $1^{st}$ uplink slot after the length of the switching delay.

It should be noted that, if irrational factors such as a processing delay, a positioning error, and an ephemeris error are considered, an adjustment amount $\Delta$ may be further added on the basis of T_offset, where the adjustment amount $\Delta$ represents a period of time, and may be configured by the network side for the terminal device, or a fixed value is agreed upon by both the network side and the terminal device through agreement. For example, $\Delta$=1 slot length, or $\Delta$=1 ms. This is not specifically limited in this embodiment of this application.

Manner 2: A value Koffset and a value Kmac are reused to determine a switching delay of UL BWP switching.

Specifically, T_offset is a sum of the value Koffset and the value Kmac, where the value Kmac indicates a delay compensation time length of an uplink signal on the network side.

It should be noted that, if the terminal device does not receive the value Kmac sent by the network side, the value Kmac is 0 by default.

A time length of T_offset in the foregoing formula is equal to a sum of a time length represented by Koffset and a time length represented by Kmac. Therefore, if time units of Koffset, Kmac, and T_offset are different, they need to be converted to a same time unit. For example, the time unit of T_offset is 1 ms, the time unit of Koffset is 1 ms, and the time unit of Kmac is 0.5 ms. In this case, T_offset=Koffset+Kmac*0.5 (ms) time length.

Optionally, when the value Koffset and the value Kmac are reused to represent the time length, quantization processing may be performed on the time length, for example, $T\_offset=\lceil(Koffset+Kmac)/slot\_duration\rceil$.

It should be noted that an application scenario of the value Kmac may be: The base station receives, in an $n^{th}$ uplink slot, an uplink HARQ-ACK corresponding to a PDSCH that carries a MAC-CE instruction. The MAC-CE instruction is a downlink signal configuration instruction, and the terminal device assumes that this downlink configuration takes effect in the $1^{st}$ slot after a downlink slot $n+XN_{slot}^{subframe,\mu}+K\_mac$, that is, takes effect in a slot $n+XN_{slot}^{subframe,\mu}+K\_mac$, where $N_{slot}^{subframe,\mu}$ is a quantity of slots included in one subframe (subframe) when the subcarrier spacing is $2^{\mu}*15$ kHz, and X is a non-negative integer agreed upon in a protocol or configured by using a parameter.

Manner 3: A TA value of the terminal device and a value Kmac are reused to determine a switching delay of UL BWP switching.

Specifically, the timing offset T_offset is a sum of the TA value of the terminal device and the value Kmac.

For example, TA = (N_TA+N_(TA, UE-specific) + N_(TA, common)+N_(TA, offset) )$\times$T_c.

N_TA represents a TA correction value instruction (that is, a TA command value) sent by the network side to the terminal device, and N_(TA, UE-specific) is a round-trip delay value obtained by the terminal device through calculation based on a location of the terminal device and a satellite location, where the round-trip delay value may be referred to as a terminal device (Ue)-specific TA value. N_(TA, common) represents a common TA value. To be specific, the common TA value is a value configured by the network side for the terminal device. N_(TA, offset) represents a fixed timing offset value, and is determined by a frequency band, NR/LTE coexistence, a duplex mode, and the like, and is agreed upon in a protocol. It is assumed that the terminal device has reported the TA value of the terminal device or a part of the TA value, for the network side to determine a complete TA value of the terminal device. For example, the terminal device reports a value of N_(TA, UE-specific) or a parameter (for example, location information) related to N_(TA, UE-specific).

A time length of the timing offset T_offset in the foregoing formula is equal to a sum of a time length represented by the TA and a time length represented by Kmac. Therefore, if time units of TA, Kmac, and T_offset are different, they need to be converted to a same time unit.

Optionally, when the time length represented by the TA and the time length represented by Kmac are reused, quantization processing may be performed on the time lengths. For example,

$$T\_offset=\lceil(TA+Kmac)/slot\_duration\rceil.$$

Manner 4: An RAR window delay used by the terminal device is reused to determine a switching delay of UL BWP switching.

Specifically, a value of T_offset is a value of the RAR window delay, where the value of the RAR window delay is a length of an RAR window delay of an RAR (an Msg 2) received by the terminal device from the network side in a random access process or a delay length of a receive window for receiving an Msg B.

The time length of T_offset in the foregoing formula is equal to a time length indicated by the RAR window delay. Therefore, if time units of the RAR window delay and T_offset are different, the time units need to be converted to a same time unit.

Optionally, when the time length indicated by the RAR window delay is reused, quantization processing may be performed on the time length. For example, $T\_offset=\lceil RAR\ window\ delay/slot\_duration\rceil$.

S503A. The terminal device sends the uplink information to the base station by using a switched BWP from the $m^{th}$ slot.

Specifically, that the terminal device sends the uplink information to the base station by using a switched BWP from the $m^{th}$ slot may include: Refer to FIG. 5C. The terminal device switches to the new BWP (the UL BWP 2) at the start moment of the $m^{th}$ slot, or the terminal device switches to the new BWP (the UL BWP 2) on a symbol in the $m^{th}$ slot.

Similarly, the base station also switches to the new BWP (the UL BWP 2) at the start moment of the $m^{th}$ slot, or the base station switches to the new BWP (the UL BWP 2) on the symbol in the $m^{th}$ slot.

Therefore, the terminal device sends the uplink information to the base station by using the switched UL BWP 2 from the start moment of the $m^{th}$ slot, and the base station also receives, by using the switched UL BWP 2 from the start moment of the $m^{th}$ slot, the uplink information sent by the base station. Alternatively, the terminal device sends the uplink information to the base station by using the switched UL BWP 2 from a symbol moment in the $m^{th}$ slot, and the base station also receives, by using the switched UL BWP 2 from the moment in the $m^{th}$ slot, the uplink information sent by the base station.

It should be noted that the signaling or the message, for example, the timing offset value T_offset, in embodiments of this application may be sent by the network device to the terminal device in a broadcast or multicast manner in at least one piece of broadcast information including a system information block (system information block, SIB) 1, other system information (other system information, OSI), a master information block (master information block, MIB), and the like. The network device sends the foregoing signaling to the terminal device in the broadcast or multicast manner, to avoid scheduling different resources for different terminal devices to send the foregoing signaling, thereby reducing signaling overheads of resource scheduling and reducing system scheduling complexity.

In addition, if the signaling is sent in a radio resource control (radio resource control, RRC) connection establishment phase and a subsequent communication process, the network device may add the signaling to RRC signaling (for example, an RRC setup (RRCsetup) message, RRC reconfiguration signaling (RRCReconfiguration), or RRC resume signaling (RRCResume)), downlink control information DCI, group DCI, a media access control (media access control, MAC) control element (control element, CE), or a timing advance command (timing advance command, TAC), or indicate the signaling/parameter value to the terminal device by using a table. Alternatively, the signaling is sent to the terminal device in a unicast or multicast manner along with data transmission or on a separately allocated PDSCH bearer. The network device may flexibly control a parameter value of each terminal device/each group of terminal devices by sending the signaling to terminal devices separately or in groups, and configure different parameter values for the terminal devices based on different locations or different areas in which the terminal devices are located, to optimize system parameters and optimize terminal communication performance/system communication performance. For example, different T_offset may be configured for terminal devices based on different locations of the terminal devices, to optimize a BWP switching delay of each terminal device/each group of terminal devices, improve switching efficiency of the terminal devices, and improve system communication efficiency.

In conclusion, in the first embodiment, in the scenario of BWP switching based on the DCI, after receiving, in the $n^{th}$ downlink slot of the serving cell, the DCI indicating BWP switching, the terminal device does not send the uplink signal on an original BWP (namely, the UL BWP 1) within a period of time $T\_offset+T_{BWPswitchDelay}+Y$ after the start of the $n^{th}$ downlink slot, and sends the uplink information, for example, a PUSCH signal, on the new BWP (namely, the UL BWP 2) of the serving cell in the $1^{st}$ uplink slot (namely, from the $m^{th}$ slot) after the period of time $T\_offset+T_{BWPswitchDelay}+Y$.

In the scenario in which the serving cell in which the DCI indicating BWP switching is sent to the terminal device and the serving cell in which BWP switching is performed belong to a same serving cell, Y=0.

In the scenario in which the serving cell in which the DCI indicating BWP switching is sent to the terminal device and the serving cell in which BWP switching is performed belong to different serving cells, Y=1 slot. In this scenario, the time length of $T\_offset+T_{BWPswitchDelay}+Y$ or $T_{BWPswitchDelay}+Y$ is determined based on the smaller SCS of the scheduling cell before and after BWP switching.

Therefore, in the scenario of BWP switching based on the DCI, the terminal device does not send the uplink information on the original BWP (namely, the UL BWP 1) within the period of time, $T\_offset+T_{BWPswitchDelay}+Y$ or $T\_offset+T_{BWPswitchDelay}$, from the start moment of the $n^{th}$ slot, until the terminal device sends the uplink information on the new BWP (namely, the UL BWP 2) in the $1^{st}$ uplink slot after the period of time $T\_offset+T_{BWPswitchDelay}+Y$ or $T\_offset+T_{BWPswitchDelay}$. Therefore, in the NTN communication scenario, in the uplink BWP switching process, it can be ensured that the base station can accurately receive the uplink information or the uplink signal sent by the terminal device.

It should be noted that when the BWP switching based on the DCI is performed between non-adjacent channel bandwidths or partially overlapping channel bandwidths, the terminal device may not be required to comply with the foregoing requirement (that is, the terminal device does not perform the foregoing steps S501A to S503A).

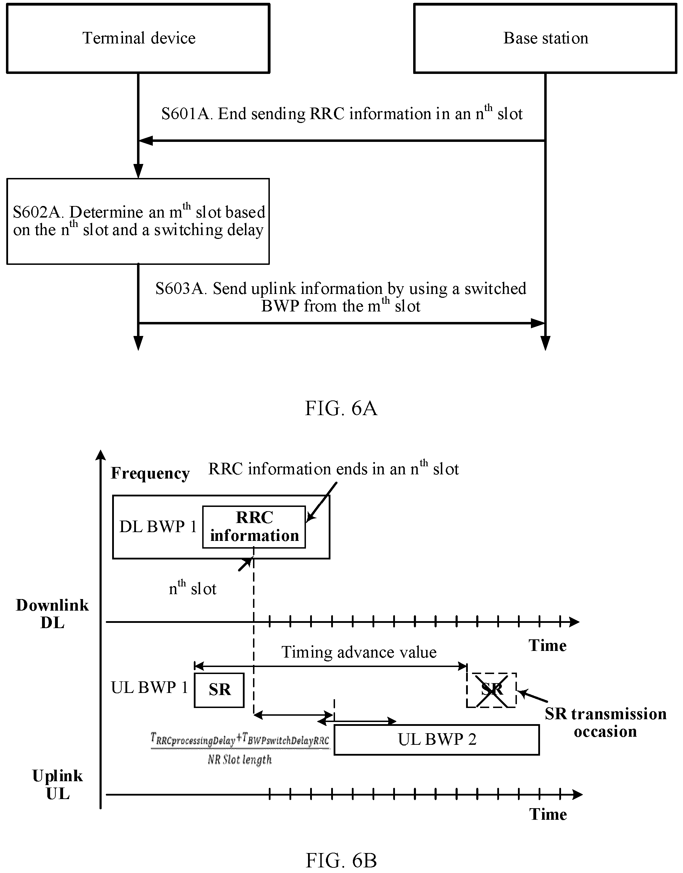

In a second embodiment, in a scenario in which BWP switching is performed based on RRC information, refer to FIG. 6B. To be specific, a base station sends RRC information to a terminal device, where the RRC information indicates the terminal device to switch from a UL BWP 1 to a UL BWP 2. When an NR technology is adapted to an NTN scenario, refer to the foregoing problem that the base station cannot receive the uplink information (for example, SR information) sent by the terminal device on the original UL BWP (that is, the UL BWP 1) in the scenario in which BWP switching is performed based on the DCI. A same problem also exists in the scenario in which BWP switching is performed based on the RRC information. Refer to FIG. 6A. A specific method procedure in this embodiment is as follows:

S601A. A base station ends sending RRC information to a terminal device in an $n^{th}$ downlink slot, where the RRC information indicates the terminal device to switch from a UL BWP 1 to a UL BWP 2, and n is a non-negative integer.

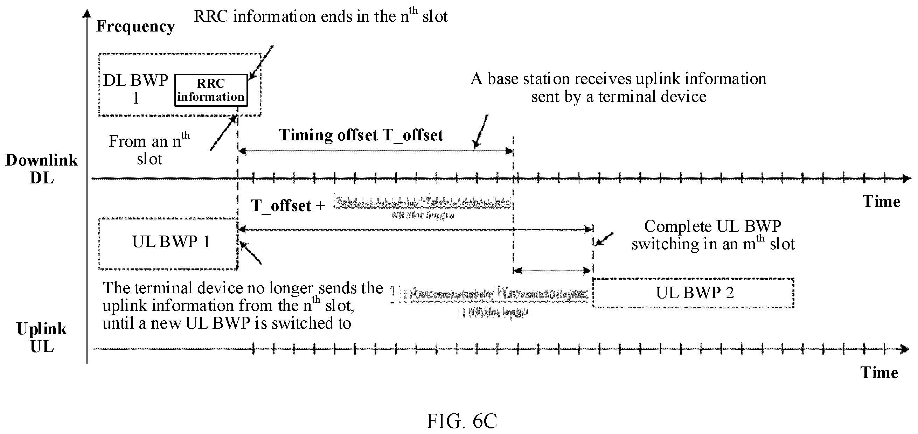

Correspondingly, refer to FIG. 6C. The terminal device receives the RRC information.

Specifically, for step S601A, refer to step S501A. Details are not described herein again.

S602A. The terminal device determines an $m^{th}$ slot based on the $n^{th}$ slot and a switching delay, where m is a positive integer greater than n.

Refer to FIG. 6C. The $m^{th}$ slot is a moment at which the terminal device completes BWP switching. In addition, the base station also completes UL BWP switching in the $m^{th}$ slot.

Refer to FIG. 6C. The terminal device ends receiving the RRC information in the $n^{th}$ downlink slot, and the terminal device starts timing at a start moment of the $n^{th}$ slot. After delaying a time length $\frac{T_{RRCprocessingDelay}+T_{BWPswitchDelayRRC}}{NR\ Slot\ length}$, the terminal device sends an uplink message/data on a new uplink BWP (namely, a UL BWP 2). A value of $\frac{T_{RRCprocessingDelay}+T_{BWPswitchDelayRRC}}{NR\ Slot\ length}$ supports a maximum time length of 22 ms.

Specifically, for a BWP switching process in step S602A, refer to FIG. 6C. When step S602A is performed, refer to step S502A. Details are not described herein again.

In a possible implementation, the switching a value of switch_delay of a delay length of UL BWP switching based on the RRC information includes the following possible implementations:

In a possible implementation, in a scenario in which UL BWP switching is performed based on the RRC information on a single carrier element CC, switch_delay may satisfy the formula 4.

In another possible implementation, in a scenario in which UL BWP switching is performed based on the RRC information on a plurality of CCs, switch_delay may satisfy the formula 5.

S603A. The terminal device sends uplink information to the base station by using a switched BWP from the $m^{th}$ slot.

When step S603A is performed, refer to step S503A. Details are not described herein again.

In conclusion, in the second embodiment, in the scenario of BWP switching based on the RRC information, after ending receiving, in the $n^{th}$ downlink slot of the serving cell, the RRC information indicating BWP switching, the terminal device does not send the uplink signal on an original BWP (namely, the UL BWP 1) within a period of time

$$T\_offset+\frac{T_{RRCprocessingDelay}+T_{BWPswitchDelayRRC}}{NR\ Slot\ length}$$ after the start of the $n^{th}$ downlink slot, and sends the uplink information, for example a PUSCH signal, on the new BWP (namely, the UL BWP 2) of the serving cell in the $1^{st}$ uplink slot (namely, from the $m^{th}$ slot) after the period of time $T\_offset+\frac{T_{RRCprocessingDelay}+T_{BWPswitchDelayRRC}}{NR\ Slot\ length}$. Therefore, in the NTN communication scenario, in the uplink BWP switching process, it can be ensured that the base station can receive the uplink information or the uplink signal sent by the terminal device.

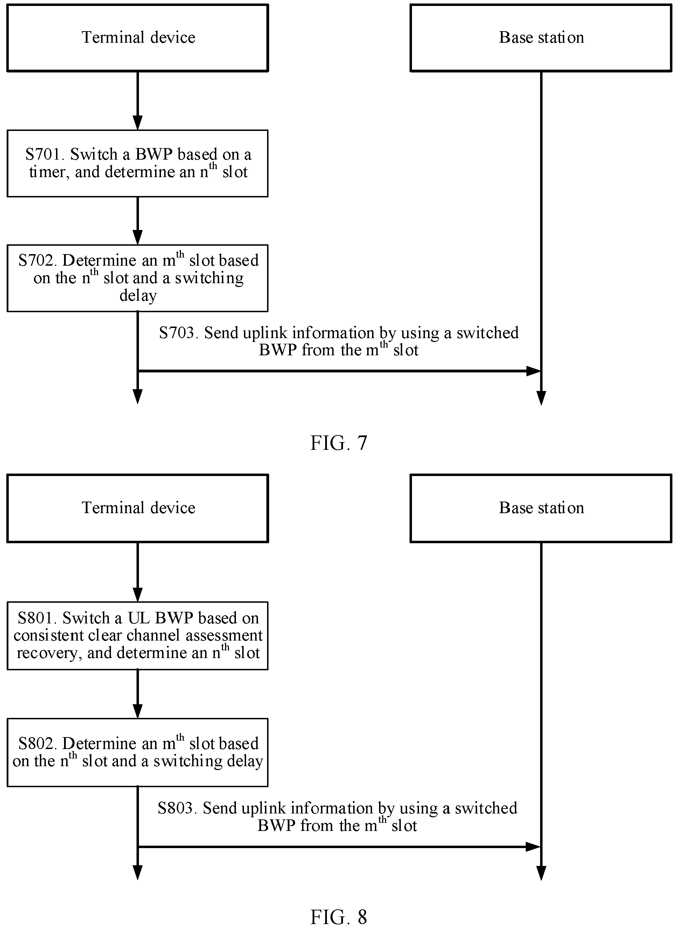

In a third embodiment, in a scenario in which a base station and a terminal device perform BWP switching based on a timer, to be specific, switching from a UL BWP 1 to a UL BWP 2, when an NR technology is adapted to an NTN scenario, also refer to the foregoing problem that the base station cannot receive the uplink information sent by the terminal device on the original UL BWP (that is, the UL BWP 1) in the scenario in which BWP switching is performed based on the DCI. A same problem also exists in the scenario in which BWP switching is performed based on the timer. Refer to FIG. 7. A specific method procedure in this embodiment is as follows:

S701. A terminal device switches a BWP based on a timer, and determines an $n^{th}$ slot, where n is a non-negative integer.

For example, a timer is separately set on a terminal device side and a base station side. When the timer on the terminal device side reaches preset time, indication information is output. The indication information indicates the terminal device to switch the BWP. The terminal device obtains the indication information in the $n^{th}$ slot. Similarly, when the timer on the base station side also reaches the preset time, indication information is output. The indication information indicates the base station to switch the BWP, and the base station obtains the indication information in the $n^{th}$ slot.

Alternatively, a timer is separately set on a terminal device side and a base station side. It is preset that uplink information is no longer sent and the BWP starts to be switched when the timer on the terminal device side reaches preset time. In other words, a slot in which the preset time is located is used as the $n^{th}$ slot. In addition, it is preset that the BWP starts to be switched when the timer on the base station side reaches the preset time, but the base station still uses an original BWP (a UL BWP 1) to receive uplink data sent by the terminal device.

After the terminal device and the base station separately obtain, in the $n^{th}$ slot and in step S701, the indication information for BWP switching, for a specific performed step, refer to step S501A. Details are not described herein again.

S702. The terminal device determines an $m^{th}$ slot based on the $n^{th}$ slot and a switching delay, where m is a positive integer greater than n.

Specifically, when step S702 is performed, refer to step S502A. The switching delay determined by the base station and the terminal device satisfies the foregoing formula 7. Details are not described herein again.

It should be noted that, in both a scenario of UL BWP switching based on a timer on a single CC and a scenario of UL BWP switching based on a timer on a plurality of CCs, a value of switch_delay may satisfy the formula 6.

S703. The terminal device sends the uplink information to the base station by using a switched BWP from the $m^{th}$ slot.

Specifically, when step S703 is performed, refer to step S503A. Details are not described herein again.

In conclusion, in the third embodiment, in the scenario of BWP switching based on the timer, the terminal device determines to perform BWP switching in the $n^{th}$ slot of the timer, and the terminal device does not send an uplink signal on an original BWP (namely, the UL BWP 1) within a period of time $T\_offset+T_{BWPswitchDelay}$ after the start of the $n^{th}$ slot of the timer, and sends uplink information on a new BWP (namely, a UL BWP 2) of a serving cell in the $1^{st}$ uplink slot (namely, from the $m^{th}$ slot) after the period of time $T\_offset+T_{BWPswitchDelay}$. Therefore, in the NTN communication scenario, in the uplink BWP switching process, it can be ensured that the base station can receive the uplink information or the uplink signal sent by the terminal device.

In a fourth embodiment, in a scenario of UL BWP switching performed by a base station and a terminal device based on consistent clear channel assessment recovery, to be specific, the terminal device and the base station switch from a UL BWP 1 to a UL BWP 2, when an NR technology is adapted to an NTN scenario, also refer to the foregoing problem that the base station cannot receive the uplink information sent by the terminal device on the original UL BWP (namely, the UL BWP 1) in the scenario in which BWP switching is performed based on the DCI. A same problem also exists in the scenario in which UL BWP switching is performed based on the consistent clear channel assessment recovery. Refer to FIG. 8. A specific method procedure in this embodiment is as follows:

S801. A terminal device switches a BWP based on consistent clear channel assessment recovery, and determines an $n^{th}$ slot, where n is a non-negative integer.

For example, when step S801 is performed, the terminal device and the base station may determine, based on a clear channel assessment recovery status, the $n^{th}$ slot in which BWP switching is indicated. For example, the terminal device obtains clear channel assessment recovery information through detection/measurement in the $n^{th}$ slot. If the clear channel assessment information indicates that a channel detected/measured by the terminal device is occupied, a first communication apparatus is indicated to switch from an uplink transmission bandwidth to a new BWP.

S802. The terminal device determines an $m^{th}$ slot based on the $n^{th}$ slot and a switching delay, where m is a positive integer greater than n.

Specifically, when step S802 is performed, refer to step S502A. The switching delay determined by the base station and the terminal device satisfies the foregoing formula 7. Details are not described herein again.

It should be noted that, in a scenario of UL BWP switching on consistent clear channel assessment recovery (BWP switching on Consistent UL CCA recovery), a value of switch_delay can satisfy the foregoing formula 6.

S803. The terminal device sends uplink information to the base station by using a switched BWP from the $m^{th}$ slot.

Specifically, when step S803 is performed, refer to step S503A. Details are not described herein again.

In conclusion, the fourth embodiment is the scenario of BWP switching based on the consistent clear channel assessment recovery. The terminal device and the base station can determine, based on consistent clear channel assessment recovery, the $n^{th}$ slot in which BWP switching is indicated, and the terminal device does not send uplink information on an original BWP (namely, a UL BWP 1) within a period of time $T\_offset+T_{BWPswitchDelay}$ after the start of the $n^{th}$ slot, and sends uplink information on a new BWP (namely, a UL BWP 2) of a serving cell in the $1^{st}$ uplink slot (namely, from the $m^{th}$ slot) after the period of time $T\_offset+T_{BWPswitchDelay}$. Therefore, in the NTN communication scenario, in the uplink BWP switching process, it can be ensured that the base station can receive the uplink information or the uplink signal sent by the terminal device.

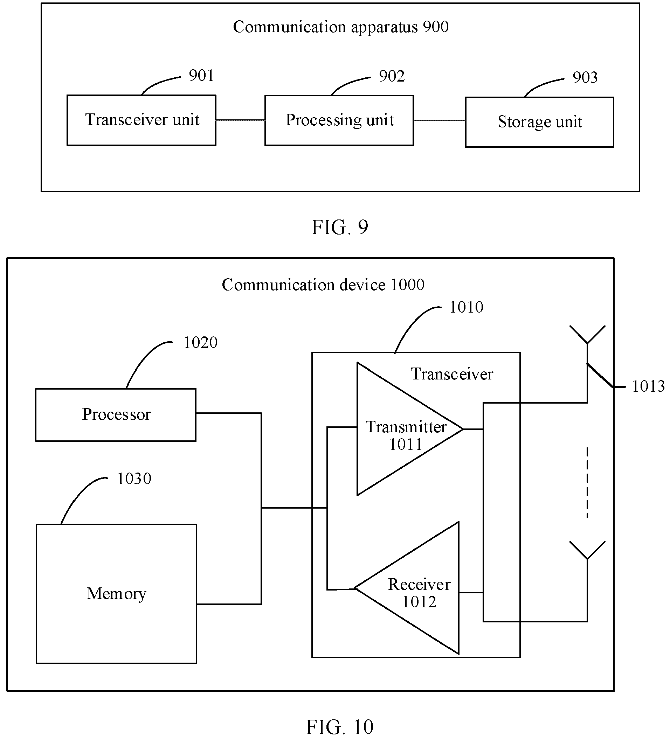

Based on a same technical concept, an embodiment of this application provides a communication apparatus. The apparatus includes a one-to-one corresponding module or unit for performing the method/operation/step/action described by the first communication apparatus (terminal device) in the foregoing embodiments. The module or unit may be a hardware circuit, may be software, or may be implemented by a hardware circuit in combination with software. The communication apparatus may have a structure shown in FIG. 9.

As shown in FIG. 9, a communication apparatus 900 may include a transceiver unit 901, and the transceiver unit 901 may implement a corresponding communication function. Specifically, the transceiver unit 901 may specifically include a receiving unit and/or a sending unit. The receiving unit may be configured to receive information and/or data, and the sending unit may be configured to send information and/or data. The transceiver unit may also be referred to as a communication interface or a transceiver module.

Optionally, the communication apparatus 900 further includes a processing unit 902. The processing unit 902 is equivalent to a processing module, and may be configured to perform data processing.

Optionally, the communication apparatus 500 may further include a storage unit 903. The storage unit 903 is equivalent to a storage module, and may be configured to store instructions and/or data. The processing unit 902 may read the instructions and/or the data in the storage module, so that the communication apparatus implements the foregoing method embodiments.

The communication apparatus 900 may be configured to perform an action performed by the terminal device in the foregoing method embodiments. The communication apparatus 900 may be a terminal device or a component that can be disposed in the terminal device. The transceiver unit 901 is configured to perform a receiving-related operation on a terminal device side in the foregoing method embodiments, and the processing unit 902 is configured to perform a processing-related operation on a first communication apparatus or the terminal device side in the foregoing method embodiments.

Optionally, the transceiver unit 901 may include a sending unit and a receiving unit. The sending unit is configured to perform a sending operation in the foregoing method embodiments. The receiving unit is configured to perform a receiving operation in the foregoing method embodiments.

It should be noted that the communication apparatus 900 may include a sending unit, but does not include a receiving unit. Alternatively, the communication apparatus 900 may include a receiving unit, but does not include a sending unit. This may be specifically determined depending on whether the foregoing solution performed by the communication apparatus 900 includes a sending action and a receiving action.

In an example, the communication apparatus 900 is configured to perform actions performed by the first communication apparatus in the embodiment shown in FIG. 4A, or the communication apparatus 900 is configured to perform actions performed by the terminal device in the embodiments shown in FIG. 5A, FIG. 6A, FIG. 7, and FIG. 8.

For example, the transceiver unit 901 is configured to obtain first indication information in a first slot, where the first indication information indicates the first communication apparatus to switch from an uplink transmission bandwidth to a first transmission bandwidth.

The processing unit 902 is configured to determine a second slot based on the first slot and a first switching delay, where the first switching delay is determined based on a first timing offset value, and the first timing offset value is determined based on a round-trip delay between a first location in an area covered by a second communication apparatus and the second communication apparatus.

The transceiver unit 901 is further configured to send first uplink information to the second communication apparatus by using the first transmission bandwidth from the second slot.

It should be understood that a specific process in which the units perform the foregoing corresponding processes is described in detail in the foregoing method embodiments. For brevity, details are not described herein again.

The processing unit 902 in the foregoing embodiment may be implemented by at least one processor or processor-related circuit. The transceiver unit 901 may be implemented by a transceiver or a transceiver-related circuit. The storage unit 903 may be implemented by at least one memory.

Based on a same technical concept, an embodiment of this application provides a communication apparatus. The apparatus includes a one-to-one corresponding module or unit for performing the method/operation/step/action described by the second communication apparatus (network device) in the foregoing embodiments. The module or unit may be a hardware circuit, may be software, or may be implemented by a hardware circuit in combination with software. The communication apparatus may also have a structure shown in FIG. 9.

As shown in FIG. 9, a communication apparatus 900 may include a transceiver unit 901, and the transceiver unit 901 may implement a corresponding communication function. Specifically, the transceiver unit may specifically include a receiving unit and/or a sending unit. The receiving unit may be configured to receive information and/or data, and the sending unit may be configured to send information and/or data. The transceiver unit may also be referred to as a communication interface or a transceiver module.

Optionally, the communication apparatus 900 further includes a processing unit 902. The processing unit 902 is equivalent to a processing module, and may be configured to perform data processing and/or a beam indication configuration process.

Optionally, the communication apparatus 900 may further include a storage unit 903. The storage unit 903 is equivalent to a storage module, and may be configured to store instructions and/or data. The processing unit 902 may read the instructions and/or the data in the storage module, so that the communication apparatus implements the foregoing method embodiments.

The communication apparatus 900 may be configured to perform an action performed by the network device in the foregoing method embodiments. The communication apparatus 900 may be a network device or a component that can be disposed in the network device. The transceiver unit 901 is configured to perform a receiving-related operation on a network device side in the foregoing method embodiments, and the processing unit 902 is configured to perform a processing-related operation on a network device side in the foregoing method embodiments.

Optionally, the transceiver unit 901 may include a sending unit and a receiving unit. The sending unit is configured to perform a sending operation in the foregoing method embodiments. The receiving unit is configured to perform a receiving operation in the foregoing method embodiments.

It should be noted that the communication apparatus 900 may include a sending unit, but does not include a receiving unit. Alternatively, the communication apparatus 900 may include a receiving unit, but does not include a sending unit. This may be specifically determined depending on whether the foregoing solution performed by the communication apparatus 900 includes a sending action and a receiving action.

In an example, the communication apparatus 900 is configured to perform actions performed by the second communication apparatus in the embodiment shown in FIG. 4A, or the communication apparatus 900 is configured to perform actions performed by the base station in the embodiments shown in FIG. 5A, FIG. 6A, FIG. 7, and FIG. 8.

For example, the processing unit 902 is configured to determine a first slot. The processing unit 902 is further configured to determine a second slot based on the first slot and a first switching delay, where the first switching delay is determined based on a first timing offset value, and the first timing offset value is determined based on a round-trip delay between a first location in an area covered by the second communication apparatus and the second communication apparatus. The transceiver unit 901 is configured to receive, by using a first transmission bandwidth from the second slot, first uplink information sent by a first communication apparatus.

It should be understood that a specific process in which the modules perform the foregoing corresponding processes has been described in detail in the foregoing method embodiments. For brevity, details are not described herein again.

The processing unit 902 in the foregoing embodiment may be implemented by at least one processor or processor-related circuit. The transceiver unit 901 may be implemented by a transceiver or a transceiver-related circuit. The storage unit may be implemented by at least one memory.

This application further provides a communication apparatus 1000. The communication apparatus 1000 may be a first communication apparatus. The first communication apparatus is a terminal device, a processor of the terminal device, or a chip. The communication apparatus 1000 may be configured to perform operations performed by the terminal device in the foregoing method embodiments. Alternatively, the communication apparatus 1000 may be a second communication apparatus. The second communication apparatus is a network device, a processor of the network device, or a chip. The communication apparatus 1000 may be configured to perform operations performed by the network device in the foregoing method embodiments.

When the communication apparatus 1000 is the first communication apparatus, that is, serves as a terminal device, FIG. 10 is a simplified schematic diagram of a structure of a terminal device. As shown in FIG. 10, the terminal device includes a transceiver 1010, a processor 1020, and a memory 1030. The transceiver 1010 includes a receiver machine 1012, a transmitter machine 1011, a radio frequency circuit (not shown), an antenna 1013, and an input/output apparatus (not shown). The memory 1030 may store computer program code.

The processor 1020 is mainly configured to: process a communication protocol and communication data, control the terminal device, execute a software program, process data of the software program, and the like. The memory is mainly configured to store the software program and the data. The radio frequency circuit is mainly configured to: perform conversion between a baseband signal and a radio frequency signal, and process the radio frequency signal. The antenna 1013 is mainly configured to receive and send a radio frequency signal in an electromagnetic wave form. The input/output apparatus, for example, a touchscreen, a display screen, or a keyboard, is mainly configured to receive data input by a user and output data to the user. It should be noted that some types of terminal devices may have no input/output apparatus.

When needing to send data, after performing baseband processing on the to-be-sent data, the processor 1020 outputs a baseband signal to the radio frequency circuit; and the radio frequency circuit performs radio frequency processing on the baseband signal and then sends a radio frequency signal to the outside in a form of an electromagnetic wave through the antenna. When data is sent to the terminal device, the radio frequency circuit receives a radio frequency signal through the antenna, converts the radio frequency signal into a baseband signal, and outputs the baseband signal to the processor. The processor 1020 converts the baseband signal into data, and processes the data. For ease of description, FIG. 10 shows only one memory, one processor, and one transceiver. In an actual terminal device product, there may be one or more processors and one or more memories. The memory may also be referred to as a storage medium, a storage device, or the like. The memory may be disposed independent of the processor, or may be integrated with the processor. This is not limited in embodiments of this application.

In embodiments of this application, the antenna and the radio frequency circuit that have a transceiver function may be considered as a transceiver unit (a transceiver module) of the terminal device, and the processor that has a processing function may be considered as a processing unit (a processing module) of the terminal device.

As shown in FIG. 10, the terminal device includes the processor 1020. The processor 1020 may also be referred to as a processing unit, a processing board, a processing module, a processing apparatus, or the like.

Optionally, the terminal device further includes the transceiver 1010 and the memory 1030. The transceiver 1010 may also be referred to as a transceiver unit, a transceiver machine, a transceiver apparatus, or the like.

Optionally, a component that is in the transceiver 1010 and that is configured to implement a receiving function may be considered as a receiving module, and a component that is in the transceiver 1010 and that is configured to implement a sending function may be considered as a sending unit or a sending module. In other words, the transceiver 1010 includes a transmitter machine 1011 and a receiver machine 1012. The transceiver 1010 may also be sometimes referred to as a transceiver machine, a transceiver module, a transceiver circuit, or the like. The transmitter machine 1011 may also be sometimes referred to as a transmitting machine, a transmitter module, a transmitter circuit, or the like. The receiver machine 1012 may also be sometimes referred to as a receiver, a receiver module, a receiver circuit, or the like.

For example, in an implementation, the processor 1020 is configured to perform processing actions on a first communication apparatus side or a terminal device side in the embodiments shown in FIG. 4A, FIG. 5A, FIG. 6A, FIG. 7, and FIG. 8, and the transceiver 1010 is configured to perform receiving and sending actions on the first communication apparatus side or the terminal device side in the embodiments shown in FIG. 4A, FIG. 5A, FIG. 6A, FIG. 7, and FIG. 8. For example, the transceiver 1010 is configured to perform the operations of S401A and S403A in the embodiment shown in FIG. 4A. The processor 1020 is configured to perform the processing operation of S402A in the embodiment shown in FIG. 4A.

It should be understood that FIG. 10 is merely an example rather than a limitation. The terminal device including the transceiver, the processor, and the memory may not depend on the structure shown in FIG. 10.

When the communication apparatus 1000 is a chip, the chip includes a processor, a memory, and a transceiver. The transceiver may be an input/output circuit or a communication interface. The processor may be a processing module, a microprocessor, or an integrated circuit integrated on the chip. The sending operation of the terminal device in the foregoing method embodiments may be understood as an output of the chip, and the receiving operation of the terminal device in the foregoing method embodiment may be understood as an input of the chip.

When the communication apparatus 1000 is a second communication apparatus, that is, when the communication apparatus 1000 is used as a network device, for example, a base station, FIG. 10 is a simplified schematic diagram of a structure of the network device. The network device includes a transceiver 1010, a processor 1020, and a memory 1030. The part 1020 is mainly configured to perform baseband processing, control the base station, and the like. The part 1020 is usually a control center of the base station, may be usually referred to as a processor, and is configured to control the base station to perform a processing operation on a network device side in the foregoing method embodiments. The part 1030 is mainly configured to store computer program code and data. The part 1010 is mainly configured to receive and send a radio frequency signal, and perform conversion between the radio frequency signal and a baseband signal. The part 1010 may be usually referred to as a transceiver module, a transceiver machine, a transceiver circuit, a transceiver, or the like. The transceiver module in the part 1010 may also be referred to as a transceiver machine, a transceiver, or the like, and includes an antenna 1013 and a radio frequency circuit (not shown). The radio frequency circuit is mainly configured to perform radio frequency processing. Optionally, in the part 1010, a component configured to implement a receiving function may be considered as a receiver machine, and a component configured to implement a sending function may be considered as a transmitter machine. In other words, the transceiver 1010 includes the transmitter machine 1011 and the receiver machine 1012. The receiver machine may also be referred to as a receiver module, a receiver, a receiver circuit, or the like, and the transmitter machine may be referred to as a transmitter module, a transmitter, a transmitter circuit, or the like.

The part 1010 and the part 1030 may include one or more boards, and each board may include one or more processors and one or more memories. The processor is configured to read and execute a program in the memory, to implement a baseband processing function and control the base station. If there are a plurality of boards, the boards may be interconnected with each other to enhance a processing capability. In an optional implementation, a plurality of boards may share one or more processors, or a plurality of boards share one or more memories, or a plurality of boards share one or more processors at the same time.

For example, in an implementation, a transceiver module in the transceiver 1010 is configured to perform receiving and sending-related processes performed by the network device in the embodiments shown in FIG. 4A, FIG. 5A, FIG. 6A, FIG. 7, and FIG. 8. The processor of the processor 1020 is configured to perform processing-related processes performed by the network device in the embodiments shown in FIG. 4A, FIG. 5A, FIG. 6A, FIG. 7, and FIG. 8.

It should be understood that FIG. 10 is merely an example rather than a limitation, and the network device including the processor, the memory, and the transceiver may not depend on the structure shown in FIG. 10.

When the communication apparatus 1000 is a chip, the chip includes a transceiver, a memory, and a processor. The transceiver may be an input/output circuit or a communication interface. The processor is a processor, a microprocessor, or an integrated circuit integrated on the chip. The sending operation of the network device in the foregoing method embodiments may be understood as an output of the chip, and the receiving operation of the network device in the foregoing method embodiment may be understood as an input of the chip.

Division into the modules in embodiments of this application is an example, is merely division into logical functions, and may be other division during actual implementation. In addition, functional modules in embodiments of this application may be integrated into one processor, or each of the modules may exist alone physically, or two or more modules may be integrated into one module. The integrated module may be implemented in a form of hardware, or may be implemented in a form of a software functional module.

An embodiment of this application further provides a computer-readable storage medium. The computer-readable storage medium stores computer instructions for implementing the method performed by the first communication apparatus (the terminal device) or the second communication apparatus (the network device) in the foregoing method embodiments.

For example, when a computer program is executed by a computer, the computer is enabled to implement the method performed by the network device in the foregoing method embodiments.

An embodiment of this application further provides a computer program product including instructions. When the instructions are executed by a computer, the computer is enabled to implement the method performed by the first communication apparatus (the terminal device) or the second communication apparatus (the network device) in the foregoing method embodiments.

An embodiment of this application further provides a communication system. The communication system includes the first communication apparatus (the terminal device) and the second communication apparatus (the network device) in the foregoing embodiments.

An embodiment of this application further provides a chip apparatus, including a processor, configured to invoke a computer program or computer instructions stored in a memory, so that the processor performs the wireless communication method in the embodiments shown in FIG. 4A, FIG. 5A, FIG. 6A, FIG. 7, and FIG. 8.

In a possible implementation, an input of the chip apparatus corresponds to the receiving operation in the embodiments shown in FIG. 4A, FIG. 5A, FIG. 6A, FIG. 7, and FIG. 8, and an output of the chip apparatus corresponds to the sending operation in the embodiments shown in FIG. 4A, FIG. 5A, FIG. 6A, FIG. 7, and FIG. 8.

Optionally, the processor is coupled to the memory through an interface.

Optionally, the chip apparatus further includes the memory, and the memory stores the computer program or the computer instructions.

The processor mentioned anywhere above may be a general-purpose central processing unit, a microprocessor, an application-specific integrated circuit (application-specific integrated circuit, ASIC), or one or more integrated circuits configured to control program execution of the wireless communication method in the embodiments shown in FIG. 4A, FIG. 5A, FIG. 6A, FIG. 7, and FIG. 8. The memory mentioned in any one of the foregoing may be a read-only memory (read-only memory, ROM), another type of static storage device that can store static information and instructions, a random access memory (random access memory, RAM), or the like.

It should be noted that, for ease and brevity of description, for explanations and beneficial effects of related content of any one of the communication apparatuses provided above, refer to the corresponding method embodiments provided above. Details are not described herein again.

In this application, the first communication apparatus (the terminal device) or the second communication apparatus (the network device) may include a hardware layer, an operating system layer running above the hardware layer, and an application layer running above the operating system layer. The hardware layer may include hardware such as a central processing unit (central processing unit, CPU), a memory management module (memory management unit, MMU), and a memory (also referred to as a main memory). An operating system at the operating system layer may be any one or more computer operating systems that implement service processing by using a process (process), for example, a Linux operating system, a Unix operating system, an Android operating system, an iOS operating system, or a Windows operating system. The application layer may include applications such as a browser, an address book, word processing software, and instant messaging software.

It should be noted that "at least one" in embodiments of this application includes one or more, and "a plurality of" means two or more than two. In addition, it should be understood that in description of this application, terms such as "first" and "second" are merely used for distinguishing and description, but should not be understood as indicating or implying relative importance, or should not be understood as indicating or implying a sequence.

Terms used in the following embodiments are merely intended to describe specific embodiments, but are not intended to limit this application. The terms "a", "the", "the foregoing", "this", and "the one" of singular forms used in this specification and the appended claims of this application are also intended to include forms such as "one or more", unless otherwise specified in the context clearly. It should be further understood that in embodiments of this application, "one or more" means one or more than two (including two); and "and/or" describes an association relationship between associated objects, and represents that three relationships may exist. For example, A and/or B may represent the following cases: Only A exists, both A and B exist, and only B exists, where A and B may be singular or plural. The character "/" generally indicates an "or" relationship between the associated objects.

Reference to "one embodiment" or "some embodiments" described in this specification means that a specific characteristic, structure or feature described in combination with this embodiment is included in one or more embodiments of this application. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner. The terms "include", "have", and their variants all mean "include but are not limited to", unless otherwise specifically emphasized in another manner.

Through descriptions of the foregoing implementations, a person skilled in the art may clearly understand that embodiments of this application may be implemented by hardware, firmware or a combination thereof. When the present invention is implemented by software, the foregoing functions may be stored in a computer-readable medium or transmitted as one or more instructions or code in the computer-readable medium. The computer-readable medium includes a computer storage medium and a communications medium, where the communications medium includes any medium that enables a computer program to be transmitted from one place to another. The storage medium may be any available medium accessible to a computer. Examples of the computer-readable medium include but are not limited to: a RAM, a ROM, an electrically erasable programmable read only memory (electrically erasable programmable read only memory, EEPROM), a compact disc read-only memory (compact disc read-only memory, CD-ROM) or another optical disc storage, a disk storage medium or another disk storage device, or any other medium that can be used to carry or store expected program code in an instruction or data structure form and can be accessed by a computer. In addition, any connection may be properly defined as a computer-readable medium. For example, if software is transmitted from a website, a server or another remote source by using a coaxial cable, an optical fiber cable, a twisted pair, a digital subscriber line (digital subscriber line, DSL) or wireless technologies such as infrared ray, radio and microwave, the coaxial cable, optical fiber cable, twisted pair, DSL or wireless technologies such as infrared ray, radio and microwave are included in fixation of a medium to which they belong. For example, a disk (disk) and a disc (disc) used in embodiments of this application include a compact disc (compact disc, CD), a laser disc, an optical disc, a digital video disc (digital video disc, DVD), a floppy disk and a Blu-ray disc. The disk generally copies data by a magnetic means, and the disc copies data optically by a laser means. The foregoing combination should also be included in the protection scope of the computer-readable medium.

In a word, the foregoing descriptions are merely embodiments of this application and are not intended to limit the protection scope of this application.

**Claims**

1. A wireless communication method, comprising:

obtaining (S401A), by a first communication apparatus, first indication information in a first slot, wherein the first indication information indicates the first communication apparatus to switch from an uplink transmission bandwidth to a first transmission bandwidth;

determining (S402A), by the first communication apparatus, a second slot based on the first slot and a first switching delay, wherein the first switching delay is determined based on a first timing offset value, and the first timing offset value is determined based on a round-trip delay between a first location in an area covered by a second communication apparatus and the second communication apparatus; and

sending (S403A), by the first communication apparatus, first uplink information to the second communication apparatus by using the first transmission bandwidth from the second slot.

2. The method according to claim 1, wherein the first indication information further indicates the first communication apparatus not to perform uplink transmission from a start moment of the first slot to a start moment of the second slot, indicates the first communication apparatus not to perform uplink transmission from an end moment of the first slot to a start moment of the second slot, or indicates the first communication apparatus not to perform uplink transmission from a moment at which the first indication information is received to a start moment of the second slot.

3. The method according to claim 1 or 2, wherein before the first communication apparatus obtains the first indication information in the first slot, the first communication apparatus sends second uplink information by using a second transmission bandwidth.

4. The method according to any one of claims 1 to 3, wherein before the determining, by the first communication apparatus, a second slot, the method further comprises: receiving, by the first communication apparatus, the first switching delay from the second communication apparatus.

5. The method according to any one of claims 1 to 4, wherein

the first switching delay comprises the first timing offset value; or
the first switching delay comprises the first timing offset value and a second switching delay.

6. The method according to claim 5, wherein the determining, by the first communication apparatus, a second slot based on the first slot and a first switching delay comprises:
determining, by the first communication apparatus, the second slot based on the first slot, the first timing offset value, and the second switching delay.

7. The method according to any one of claims 1 to 6, wherein

the first timing offset value is a value Koffset, and the value Koffset is for determining an uplink data scheduling delay;

the first timing offset value is a sum of a value Koffset and a value Kmac, the value Koffset is for determining an uplink data scheduling delay, and the value Kmac is determined based on a delay compensation time length of an uplink signal on a network side;

the first timing offset value is a sum of a timing advance, TA, value of the first communication apparatus and a value Kmac, and the value Kmac is determined based on a delay compensation time length of an uplink signal on a network side; or

the first timing offset value is a length value of a random access response window delay RAR window delay received by the first communication apparatus.

8. The method according to any one of claims 1 to 7, wherein the first indication information is carried in downlink control information signaling or radio resource control signaling.

9. A wireless communication method, comprising:

determining (S404A), by a second communication apparatus, a first slot;
determining (S405A), by the second communication apparatus, a second slot based on the first slot and a first switching delay, wherein the first switching delay is determined based on a first timing offset value, and the first timing offset value is determined based on a round-trip delay between a first location in an area covered by the second communication apparatus and the second communication apparatus; and
receiving (S406A), by the second communication apparatus by using a first transmission bandwidth from the second slot, first uplink information sent by a first communication apparatus.

10. The method according to claim 9, wherein the determining, by a second communication apparatus, a first slot comprises:

using, by the second communication apparatus, a slot to which an end moment belongs as the first slot, wherein the end moment is a moment at which the second communication apparatus sends first indication information to the first communication apparatus, and the first indication information indicates the first communication apparatus to switch from an uplink transmission bandwidth to a first transmission bandwidth; or
using, by the second communication apparatus, a slot to which an end moment belongs as the first slot, wherein the end moment is a moment at which the second communication apparatus obtains first indication information, and the first indication information indicates the first communication apparatus to switch from an uplink transmission bandwidth to a first transmission bandwidth.

11. The method according to claim 9 or 10, wherein the first indication information further indicates the first communication apparatus not to perform uplink transmission from a start moment of the first slot to a start moment of the second slot, indicates the first communication apparatus not to perform uplink transmission from an end moment of the first slot to a start moment of the second slot, or indicates the first communication apparatus not to perform uplink transmission from a moment at which the first indication information is received to a start moment of the second slot.

12. The method according to any one of claims 9 to 11, wherein before the second communication apparatus switches to the first transmission bandwidth, the second communication apparatus receives second uplink information by using a second transmission bandwidth.

13. A communication apparatus, comprising a transceiver unit and a processing unit, wherein the transceiver unit is configured to obtain first indication information in a first slot, wherein the first indication information indicates the apparatus to switch from an uplink transmission bandwidth to a first transmission bandwidth;

the processing unit is configured to determine a second slot based on the first slot and a first switching delay, wherein the first switching delay is determined based on a first timing offset value, and the first timing offset value is determined based on a round-trip delay between a first location in an area covered by a second communication apparatus and the second communication apparatus; and
the processing unit is further configured to send first uplink information to the second communication apparatus by using the first transmission bandwidth from the second slot.

14. A communication apparatus, comprising a transceiver unit and a processing unit, wherein

the processing unit is configured to determine a first slot;
the processing unit is further configured to determine a second slot based on the first slot and a first switching delay, wherein the first switching delay is determined based on a first timing offset value, and the first timing offset value is determined based on a round-trip delay between a first location in an area covered by the apparatus and the apparatus; and
the transceiver unit is configured to receive, by using a first transmission bandwidth from the second slot, first uplink information sent by a first communication apparatus.

15. A computer program product comprising instructions, wherein when the computer program product runs on a computer, the method according to any one of claims 1 to 8 is performed, or the method according to any one of claims 9 to 12 is performed.

**Patentansprüche**

1. Verfahren zur drahtlosen Kommunikation, umfassend:

Erlangen (S401A), durch eine erste Kommunikationsvorrichtung, von ersten Anzeigeinformationen in einem ersten Slot, wobei die ersten Anzeigeinformationen der ersten Kommunikationsvorrichtung anzeigen, von einer Uplink-Übertragungsbandbreite auf eine erste Übertragungsbandbreite umzuschalten;
Bestimmen (S402A), durch die erste Kommunikationsvorrichtung, eines zweiten Slots basierend auf dem ersten Slot und einer ersten Umschaltverzögerung, wobei die erste Umschaltverzögerung basierend auf einem ersten Zeitversatzwert bestimmt wird und der erste Zeitversatzwert basierend auf einer Umlaufverzögerung zwischen einem ersten Standort in einem Bereich, der durch eine zweite Kommunikationsvorrichtung abgedeckt wird, und der zweiten Kommunikationsvorrichtung bestimmt wird; und

Senden (S403A), durch die erste Kommunikationsvorrichtung, von ersten Uplink-Informationen an die zweite Kommunikationsvorrichtung unter Verwendung der ersten Übertragungsbandbreite aus dem zweiten Slot.

2. Verfahren nach Anspruch 1, wobei die ersten Anzeigeinformationen der ersten Kommunikationsvorrichtung ferner anzeigen, von einem Startzeitpunkt des ersten Slots bis zu einem Startzeitpunkt des zweiten Slots keine Uplink-Übertragung durchzuführen, der ersten Kommunikationsvorrichtung anzeigen, von einem Endzeitpunkt des ersten Slots bis zu einem Startzeitpunkt des zweiten Slots keine Uplink-Übertragung durchzuführen, oder der ersten Kommunikationsvorrichtung anzeigen, von einem Zeitpunkt, zu dem die ersten Anzeigeinformationen empfangen werden, bis zu einem Startzeitpunkt des zweiten Slots keine Uplink-Übertragung durchzuführen.

3. Verfahren nach Anspruch 1 oder 2, wobei die erste Kommunikationsvorrichtung, bevor die erste Kommunikationsvorrichtung die ersten Anzeigeinformationen in dem ersten Slot erlangt, zweite Uplink-Informationen unter Verwendung einer zweiten Übertragungsbandbreite sendet.

4. Verfahren nach einem der Ansprüche 1 bis 3, wobei das Verfahren vor dem Bestimmen, durch die erste Kommunikationsvorrichtung, eines zweiten Slots ferner Folgendes umfasst: Empfangen, durch die erste Kommunikationsvorrichtung, der ersten Umschaltverzögerung von der zweiten Kommunikationsvorrichtung.

5. Verfahren nach einem der Ansprüche 1 bis 4, wobei

die erste Umschaltverzögerung den ersten Zeitversatzwert umfasst; oder
die erste Umschaltverzögerung den ersten Zeitversatzwert und eine zweite Umschaltverzögerung umfasst.

6. Verfahren nach Anspruch 5, wobei das Bestimmen, durch die erste Kommunikationsvorrichtung, eines zweiten Slots basierend auf dem ersten Slot und einer ersten Umschaltverzögerung Folgendes umfasst: Bestimmen, durch die erste Kommunikationsvorrichtung, des zweiten Slots basierend auf dem ersten Slot, dem ersten Zeitversatzwert und der zweiten Umschaltverzögerung.

7. Verfahren nach einem der Ansprüche 1 bis 6, wobei

der erste Zeitversatzwert ein Wert Koffset ist und der Wert Koffset zum Bestimmen einer Uplink-Datenplanungsverzögerung dient;
der erste Zeitversatzwert eine Summe aus einem Wert Koffset und einem Wert Kmac ist, wobei der Wert Koffset zum Bestimmen einer Uplink-Datenplanungsverzögerung dient und der Wert Kmac basierend auf einer Verzögerungskompensationszeitlänge eines Uplink-Signals auf einer Netzseite bestimmt wird;
der erste Zeitversatzwert eine Summe aus einem Zeitvorlaufwert, TA-Wert, der ersten Kommunikationsvorrichtung und einem Wert Kmac ist und der Wert Kmac basierend auf einer Verzögerungskompensationszeitlänge eines Uplink-Signals auf einer Netzseite bestimmt wird; oder
der erste Zeitversatzwert ein Längenwert einer Direktzugriffsantwort-Fensterverzögerung, RAR-Fensterverzögerung, ist, der durch die erste Kommunikationsvorrichtung empfangen wird.

8. Verfahren nach einem der Ansprüche 1 bis 7, wobei die ersten Anzeigeinformationen in einer Downlink-Steuerungsinformationensignalisierung oder Funkressourcensteuerungssignalisierung enthalten sind.

9. Verfahren zur drahtlosen Kommunikation, umfassend:

Bestimmen (S404A), durch eine zweite Kommunikationsvorrichtung, eines ersten Slots;
Bestimmen (S405A), durch die zweite Kommunikationsvorrichtung, eines zweiten Slots basierend auf dem ersten Slot und einer ersten Umschaltverzögerung, wobei die erste Umschaltverzögerung basierend auf einem ersten Zeitversatzwert bestimmt wird und der erste Zeitversatzwert basierend auf einer Umlaufverzögerung zwischen einem ersten Standort in einem Bereich, der durch eine zweite Kommunikationsvorrichtung abgedeckt wird, und der zweiten Kommunikationsvorrichtung bestimmt wird; und
Empfangen (S406A), durch die zweite Kommunikationsvorrichtung unter Verwendung einer ersten Übertragungsbandbreite aus dem zweiten Slot, von ersten Uplink-Informationen, die durch eine erste Kommunikationsvorrichtung gesendet werden.

10. Verfahren nach Anspruch 9, wobei das Bestimmen, durch eine zweite Kommunikationsvorrichtung, eines ersten Slots Folgendes umfasst:

Verwenden, durch die zweite Kommunikationsvorrichtung, eines Slots, zu dem ein Endzeitpunkt gehört, als den ersten Slot, wobei der Endzeitpunkt ein Zeitpunkt ist, zu dem die zweite Kommunikationsvorrichtung erste Anzeigeinformationen an die erste Kommunikationsvorrichtung sendet und die ersten Anzeigeinformationen der ersten Kommunikationsvorrichtung anzeigen, von einer Uplink-Übertragungsbandbreite auf eine erste Übertragungsbandbreite umzuschalten; oder
Verwenden, durch die zweite Kommunikationsvorrichtung, eines Slots, zu dem ein Endzeitpunkt gehört, als den ersten Slot, wobei der Endzeitpunkt ein Zeitpunkt ist, zu dem die zweite Kommunikationsvorrichtung erste Anzeigeinformationen erlangt und die ersten Anzeigeinformationen der ersten Kommunikationsvorrichtung anzeigen, von einer Uplink-Übertragungsbandbreite auf eine erste Übertragungsbandbreite umzuschalten.

11. Verfahren nach Anspruch 9 oder 10, wobei die ersten Anzeigeinformationen der ersten Kommunikationsvorrichtung ferner anzeigen, von einem Startzeitpunkt des ersten Slots bis zu einem Startzeitpunkt des zweiten Slots keine Uplink-Übertragung durchzuführen, der ersten Kommunikationsvorrichtung anzeigen, von einem Endzeitpunkt des ersten Slots bis zu einem Startzeitpunkt des zweiten Slots keine Uplink-Übertragung durchzuführen, oder der ersten Kommunikationsvorrichtung anzeigen, von einem Zeitpunkt, zu dem die ersten Anzeigeinformationen empfangen werden, bis zu einem Startzeitpunkt des zweiten Slots keine Uplink-Übertragung durchzuführen.

12. Verfahren nach einem der Ansprüche 9 bis 11, wobei die zweite Kommunikationsvorrichtung, bevor die zweite Kommunikationsvorrichtung auf die erste Übertragungsbandbreite umschaltet, zweite Uplink-Informationen unter Verwendung einer zweiten Übertragungsbandbreite empfängt.

13. Kommunikationsvorrichtung, umfassend eine Sende-/Empfangseinheit und eine Verarbeitungseinheit, wobei

die Sende-/Empfangseinheit dazu konfiguriert ist, erste Anzeigeinformationen in einem ersten Slot zu erlangen, wobei die ersten Anzeigeinformationen der Vorrichtung anzeigen, von einer Uplink-Übertragungsbandbreite auf eine erste Übertragungsbandbreite umzuschalten;
die Verarbeitungseinheit dazu konfiguriert ist, einen zweiten Slot basierend auf dem ersten Slot und einer ersten Umschaltverzögerung zu bestimmen, wobei die erste Umschaltverzögerung basierend auf einem ersten Zeitversatzwert bestimmt wird und der erste Zeitversatzwert basierend auf einer Umlaufverzögerung zwischen einem ersten Standort in einem Bereich, der durch eine zweite Kommunikationsvorrichtung abgedeckt wird, und der zweiten Kommunikationsvorrichtung bestimmt wird; und
die Verarbeitungseinheit ferner dazu konfiguriert ist, erste Uplink-Informationen unter Verwendung der ersten Übertragungsbandbreite aus dem zweiten Slot an die zweite Kommunikationsvorrichtung zu senden.

14. Kommunikationsvorrichtung, umfassend eine Sende-/Empfangseinheit und eine Verarbeitungseinheit, wobei

die Verarbeitungseinheit dazu konfiguriert ist, einen ersten Slot zu bestimmen;
die Verarbeitungseinheit ferner dazu konfiguriert ist, einen zweiten Slot basierend auf dem ersten Slot und einer ersten Umschaltverzögerung zu bestimmen, wobei die erste Umschaltverzögerung basierend auf einem ersten Zeitversatzwert bestimmt wird und der erste Zeitversatzwert basierend auf einer Umlaufverzögerung zwischen einem ersten Standort in einem Bereich, der durch die Vorrichtung abgedeckt wird, und der Vorrichtung bestimmt wird; und
die Sende-/Empfangseinheit dazu konfiguriert ist, unter Verwendung einer ersten Übertragungsbandbreite aus dem zweiten Slot erste Uplink-Informationen zu empfangen, die durch eine erste Kommunikationsvorrichtung gesendet werden.

15. Computerprogrammprodukt, umfassend Anweisungen, wobei, wenn das Computerprogrammprodukt auf einem Computer ausgeführt wird, das Verfahren nach einem der Ansprüche 1 bis 8 durchgeführt wird oder das Verfahren nach einem der Ansprüche 9 bis 12 durchgeführt wird.

**Revendications**

1. Procédé de communication sans fil, comprenant :

   l'obtention (S401A), par un premier appareil de communication, de premières informations d'indication dans un premier créneau, dans lequel les premières informations d'indication indiquent au premier appareil de communication de passer d'une bande passante de transmission en liaison montante à une première bande passante de transmission ;
   la détermination (S402A), par le premier appareil de communication, d'un second créneau sur la base du premier créneau et d'un premier délai de commutation, dans lequel le premier délai de commutation est déterminé sur la base d'une première valeur de décalage temporel, et la première valeur de décalage temporel est déterminée sur la base d'un délai aller-retour entre un premier emplacement dans une zone couverte par un second appareil de communication et le second appareil de communication ; et
   l'envoi (S403A), par le premier appareil de communication, de premières informations de liaison montante au second appareil de communication à l'aide de la première bande passante de transmission provenant du second créneau.

2. Procédé selon la revendication 1, dans lequel les premières informations d'indication indiquent également au premier appareil de communication de ne pas réaliser de transmission en liaison montante entre un début du premier créneau et un début du second créneau, indiquent au premier appareil de communication de ne pas réaliser de transmission en liaison montante entre une fin du premier créneau et un début du second créneau, ou indiquent au premier appareil de communication de ne pas réaliser de transmission en liaison montante entre un moment où les premières informations d'indication sont reçues et un début du second créneau.

3. Procédé selon la revendication 1 ou 2, dans lequel, avant que le premier appareil de communication obtienne les premières informations d'indication dans le premier créneau, le premier appareil de communication envoie de secondes informations de liaison montante à l'aide d'une seconde bande passante de transmission.

4. Procédé selon l'une quelconque des revendications 1 à 3, dans lequel avant la détermination, par le premier appareil de communication, d'un second créneau, le procédé comprend également : la réception, par le premier appareil de communication, du premier délai de commutation provenant du second appareil de communication.

5. Procédé selon l'une quelconque des revendications 1 à 4, dans lequel

   le premier délai de commutation comprend la première valeur de décalage temporel ; ou
   le premier délai de commutation comprend la première valeur de décalage temporel et un second délai de commutation.

6. Procédé selon la revendication 5, dans lequel la détermination, par le premier appareil de communication, d'un second créneau sur la base d'un premier créneau et d'un premier délai de commutation comprend :
   la détermination, par le premier appareil de communication, du second créneau sur la base du premier créneau, de la première valeur de décalage temporel, et du second délai de commutation.

7. Procédé selon l'une quelconque des revendications 1 à 6, dans lequel

   la première valeur de décalage temporel est une valeur Koffset, et la valeur Koffset sert à déterminer un délai de planification de données de liaison montante ;
   la première valeur de décalage temporel est une somme d'une valeur Koffset et d'une valeur Kmac, la valeur Koffset sert à déterminer un délai de planification de données de liaison montante, et la valeur Kmac est déterminée sur la base d'une durée de compensation de délai d'un signal de liaison montante sur un côté réseau ;
   la première valeur de décalage temporel est une somme d'une valeur d'avance temporelle, TA, du premier appareil de communication et d'une valeur Kmac, et la valeur Kmac est déterminée sur la base d'une durée de compensation de délai d'un signal de liaison montante sur un côté réseau ; ou
   la première valeur de décalage temporel est une valeur de longueur d'un délai de fenêtre de réponse d'accès aléatoire, délai de fenêtre RAR, reçu par le premier appareil de communication.

8. Procédé selon l'une quelconque des revendications 1 à 7, dans lequel les premières informations d'indication sont transportées dans une signalisation d'informations de commande de liaison descendante ou une signalisation de commande de ressource radio.

9. Procédé de communication sans fil, comprenant :

la détermination (S404A), par un second appareil de communication, d'un premier créneau ;
la détermination (S405A), par le second appareil de communication, d'un second créneau sur la base du premier créneau et d'un premier délai de commutation, dans lequel le premier délai de commutation est déterminé sur la base d'une première valeur de décalage temporel, et la première valeur de décalage temporel est déterminée sur la base d'un délai aller-retour entre un premier emplacement dans une zone couverte par le second appareil de communication et le second appareil de communication ; et
la réception (S406A), par le second appareil de communication à l'aide d'une première bande passante de transmission provenant du second créneau, de premières informations de liaison montante envoyées par un appareil de communication.

10. Procédé selon la revendication 9, dans lequel la détermination, par un second appareil de communication, d'un premier créneau comprend :

l'utilisation, par le second appareil de communication, d'un créneau auquel appartient un instant de fin, comme premier créneau, dans lequel la fin est un moment auquel le second appareil de communication envoie de premières informations d'indication au premier appareil de communication, et les premières informations d'indication indiquent au premier appareil de communication de passer d'une bande passante de transmission en liaison montante à une première bande passante de transmission ; ou
l'utilisation, par le second appareil de communication, d'un créneau auquel appartient un instant de fin, comme premier créneau, dans lequel la fin est un moment auquel le second appareil de communication obtient de premières informations d'indication, et les premières informations d'indication indiquent au premier appareil de communication de passer d'une bande passante de transmission en liaison montante à une première bande passante de transmission.

11. Procédé selon la revendication 9 ou 10, dans lequel les premières informations d'indication indiquent également au premier appareil de communication de ne pas réaliser de transmission en liaison montante entre un début du premier créneau et un début du second créneau, indiquent au premier appareil de communication de ne pas réaliser de transmission en liaison montante entre une fin du premier créneau et un début du second créneau, ou indiquent au premier appareil de communication de ne pas réaliser de transmission en liaison montante entre un moment où les premières informations d'indication sont reçues et un début du second créneau.

12. Procédé selon l'une quelconque des revendications 9 à 11, dans lequel, avant que le second appareil de communication ne passe à la première bande passante de transmission, le second appareil de communication reçoit de secondes informations de liaison montante à l'aide d'une seconde bande passante de transmission.

13. Appareil de communication, comprenant une unité d'émission-réception et une unité de traitement, dans lequel

l'unité d'émission-réception est configurée pour obtenir de premières informations d'indication dans un premier créneau, dans lequel les premières informations d'indication indiquent à l'appareil de passer d'une bande passante de transmission en liaison montante à une première bande passante de transmission ; l'unité de traitement est configurée pour déterminer un second créneau sur la base du premier créneau et un premier délai de commutation, dans lequel le premier délai de commutation est déterminé sur la base d'une première valeur de décalage temporel, et la première valeur de décalage temporel est déterminée sur la base d'un délai aller-retour entre un premier emplacement dans une zone couverte par un second appareil de communication et le second appareil de communication ; et
l'unité de traitement est également configurée pour envoyer de premières informations de liaison montante au second appareil de communication à l'aide de la première bande passante de transmission provenant du second créneau.

14. Appareil de communication, comprenant une unité d'émission-réception et une unité de traitement, dans lequel

l'unité de traitement est configurée pour déterminer un premier créneau ;
l'unité de traitement est également configurée pour déterminer un second créneau sur la base du premier créneau et un premier délai de commutation, dans lequel le premier délai de commutation est déterminé sur la base d'une première valeur de décalage temporel, et la première valeur de décalage temporel est déterminée sur la base d'un délai aller-retour entre un premier emplacement dans une zone couverte par l'appareil et l'appareil ; et

l'unité d'émission-réception est configurée pour recevoir, à l'aide d'une première bande passante de transmission provenant du second créneau, de premières informations de liaison montante envoyées par un premier appareil de communication.

15. Produit de programme informatique comprenant des instructions, dans lequel lorsque le produit de programme informatique est exécuté sur un ordinateur, le procédé selon l'une quelconque des revendications 1 à 8 est réalisé, ou le procédé selon l'une quelconque des revendications 9 à 12 est réalisé.

Timing advance
adjustment amount

| Frame 1 | Frame 2 | Frame 3 |
| --- | --- | --- |

| Frame 1 | Frame 2 | Frame 3 |
| --- | --- | --- |

Uplink data sent by
a user terminal

FIG. 1

FIG. 2A

EP 4 418 763 B1

End receiving, in the $n^{th}$
slot, DCI information for
BWP switching

DL BWP 1    DCI

From an $n^{th}$ slot

**Frequency**

**Downlink
DL**

Timing advance value

SR transmission
occasion

**Time**

UL BWP 1    SR    SR

Timing advance value
range

$T_{BWPswitchDelay}+Y$

UL BWP 2

**Uplink
UL**

**Time**

FIG. 2B

FIG. 2C

Satellite

Service
link

Feeder link

User terminal

User terminal

Gateway          gNB

FIG. 3A

Diameter: 100 to 300 km

User terminal (aircraft)

Height: 6 to 12 km

Network
device

Network
device

Network
device

FIG. 3B

```
┌─────────────────────┐                    ┌─────────────────────┐
│  First communication│                    │ Second communication│
│      apparatus      │                    │      apparatus      │
└─────────────────────┘                    └─────────────────────┘
           │                                          │
           ▼                                          ▼
┌─────────────────────┐                    ┌─────────────────────┐
│ S401A. Obtain first │                    │ S404A. Determine the│
│ indication          │                    │ first               │
│ information in a    │                    │       slot          │
│ first slot          │                    │                     │
└─────────────────────┘                    └─────────────────────┘
           │                                          │
           ▼                                          ▼
┌─────────────────────┐                    ┌─────────────────────┐
│ S402A. Determine a  │                    │ S405A. Determine the│
│ second slot based on│                    │ second slot based on│
│ the first slot and  │                    │ the first slot and  │
│ a first switching   │                    │ the first switching │
│ delay               │                    │ delay               │
└─────────────────────┘                    └─────────────────────┘
           │                                          │
```

S403A. The first communication
apparatus sends first uplink information
by using a first transmission bandwidth
from the second slot

S406A. The second communication
apparatus receives the first uplink
information by using the first transmission
bandwidth from the second slot

FIG. 4A

FIG. 4B

EP 4 418 763 B1

| Terminal device | Base station |
|---|---|

S501A. Send DCI in an $n^{th}$ downlink slot

S502A. Determine an $m^{th}$ slot based on the $n^{th}$ slot and a switching delay

S503A. Send uplink information by using a switched BWP from the $m^{th}$ slot

FIG. 5A

FIG. 5B

EP 4 418 763 B1

| | $n^{th}$ slot | | | | | $m^{th}$ slot | |

FIG. 5C

EP 4 418 763 B1

Downlink data

DCI slot n

Downlink data received by a user terminal

Uplink data

...

Timing advance adjustment amount

$\text{Slot} \left\lfloor n \cdot \dfrac{2^{\mu_{PUSCH}}}{2^{\mu_{PDCCH}}} \right\rfloor + K_2$

$\text{PUSCH slot} \left\lfloor n \cdot \dfrac{2^{\mu_{PUSCH}}}{2^{\mu_{PDCCH}}} \right\rfloor + K_2$

**(a)** Uplink data sent by the user terminal

Downlink data

DCI slot n

Downlink data received by a user terminal

Uplink data

...

Uplink data sent by the user terminal

Timing advance adjustment amount

$\text{Slot} \left\lfloor n \cdot \dfrac{2^{\mu_{PUSCH}}}{2^{\mu_{PDCCH}}} \right\rfloor + K_2 + K_{offset}$

**(b)**

$\text{PUSCH slot} \left\lfloor n \cdot \dfrac{2^{\mu_{PUSCH}}}{2^{\mu_{PDCCH}}} \right\rfloor + K_2 + K_{offset}$

FIG. 5D

Frequency

DCI information indicating BWP switching ends in the $n^{th}$ slot

DL BWP 1    DCI

A base station receives uplink information sent by a terminal device

**Downlink DL**

From an $n^{th}$ slot

**Timing offset T_offset**

Time

**T_offset**+$T_{BWPswitchDelay}$+ Y

UL BWP 1

Complete UL BWP switching in an $m^{th}$ slot

$T_{BWPswitchDelay}$+Y

UL BWP 2

The terminal device no longer sends the uplink information from the $n^{th}$ slot, until a new UL BWP is switched to

**Uplink UL**

Time

FIG. 5E

EP 4 418 763 B1

EP 4 418 763 B1

**Frequency**

DCI information indicating BWP
switching ends in the $n^{th}$ slot

| DL BWP 1 | DCI | |

Send DCI
information
from an $n^{th}$ slot

**Downlink
DL**

Time

T_offset

| UL BWP 1 |

Complete UL BWP
switching in an $m^{th}$ slot

$T_{BWPswitchDelay}+Y$

| UL BWP 2 |

The terminal device receives DCI information in the
$n^{th}$ slot, and no longer sends uplink information from
the $n^{th}$ slot, until a new UL BWP is switched to

**Uplink UL**

Time

FIG. 5F

FIG. 6A

FIG. 6B

FIG. 6C

```
┌─────────────────────────┐                    ┌─────────────────────────┐
│     Terminal device     │                    │       Base station      │
└─────────────────────────┘                    └─────────────────────────┘
            │                                               │
            ▼                                               │
┌─────────────────────────┐                                 │
│ S701. Switch a BWP based│                                 │
│ on a timer, and determine│                                │
│ an nᵗʰ slot             │                                 │
└─────────────────────────┘                                 │
            │                                                │
            ▼                                                │
┌─────────────────────────┐                                 │
│ S702. Determine an mᵗʰ  │                                 │
│ slot based on the nᵗʰ   │                                 │
│ slot and a switching    │                                 │
│ delay                   │                                 │
└─────────────────────────┘                                 │
            │   S703. Send uplink information by using a    │
            │   switched BWP from the mᵗʰ slot             │
            │──────────────────────────────────────────────▶│
            ▼                                                ▼
```

$S701.$ Switch a BWP based on a timer, and determine an $n^{th}$ slot

$S702.$ Determine an $m^{th}$ slot based on the $n^{th}$ slot and a switching delay

$S703.$ Send uplink information by using a switched BWP from the $m^{th}$ slot

FIG. 7

$S801.$ Switch a UL BWP based on consistent clear channel assessment recovery, and determine an $n^{th}$ slot

$S802.$ Determine an $m^{th}$ slot based on the $n^{th}$ slot and a switching delay

$S803.$ Send uplink information by using a switched BWP from the $m^{th}$ slot

FIG. 8

Communication apparatus 900

901

Transceiver unit

902

Processing unit

903

Storage unit

FIG. 9

Communication device 1000

1010

1020

Processor

Transceiver

Transmitter
1011

1013

1030

Memory

Receiver
1012

FIG. 10

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 112399569 A